# EUROPEAN PATENT APPLICATION

(11) **EP 1 802 059 A2**
(43) Date of publication of application: **27.06.2007**
(21) Application number: 05785965.4
(22) Date of filing: 20.09.2005
(51) Int. Cl.: H04L 12/66

(54) **REPEATER, REPEATING METHOD, REPEATING PROGRAM, AND NETWORK ATTACK DEFENDING SYSTEM**

(30) Priority: 12.10.2004 JP 2004298247; 22.10.2004 JP 2004308554
(71) Applicant: NIPPON TELEGRAPH AND TELEPHONE CORPORATION, Tokyo 100-8116 (JP)
(72) Inventor: SEBAYASHI, Katsuhiro NTT Int.Property Center, Tokyo, 1808585 (JP); KURAKAMI, Hiroshi NTT Int.Property Center, Tokyo, 1808585 (JP); SOEJIMA, Yuji NTT Int.Property Center, Tokyo, 1808585 (JP); CHEN, Eric NTT Int.Property Center, Tokyo, 1808585 (JP); FUJI, Hitoshi NTT Int.Property Center, Tokyo, 1808585 (JP)
(74) Representative: HOFFMANN EITLE
(86) International application number: PCT/JP2005/017305
(87) International publication number: WO 2006/040910

(57) **Abstract**

When a signature is received from an adjacent repeater device, a repeater device 10 determines whether a number of packets that satisfy a condition of the received signature within a unit time exceeds a predetermined threshold. When the repeater device 10 determines that the number of packets within a unit time exceeds the predetermined threshold, the repeater device 10 determines whether a number of times that the predetermined threshold is continuously exceeded exceeds a predetermined value. As a determination result, when the repeater device 10 determines that the number of times that the predetermined threshold is continuously exceeded exceeds the predetermined value, the repeater device 10 sends the signature received from the adjacent repeater device to another repeater device other than the adjacent repeater device from which the signature is received.

## Description

### TECHNICAL FIELD

The present invention relates to a repeater device, a relaying method, a relaying program, and a network attack protection system that receive a signature for controlling passage of packets from an adjacent repeater device, and send the received signature to another adjacent repeater device.

### BACKGROUND ART

Network attack protection systems that have a plurality of repeater devices arranged in a network to which computers that are to be protected are connected and protect the computers receiving DoS (Denial of Service) attacks or DDoS (Distributed Denial of Service) attacks are known from before. For example, with a network attack protection system disclosed in Patent Document 1 (Japanese Published Unexamined Patent Application No. 2003-283554) and Patent Document 2 (Japanese Published Unexamined Patent Application No. 2003-283572) whether communication traffic matches predetermined conditions for detecting suspicious attacking packets is checked at a repeater device. When matching traffic is detected, the repeater device generates a signature indicating a transmission band restriction value of the detected suspicious attacking packet, sends the signature to an adjacent repeater device (a repeater device that is adjacent to the target repeater device), and thereafter performs a process of restricting the transmission band of suspicious attacking packets identified by the signature.

The repeater device that received the signature (adjacent repeater device) restricts the transmission band of passing packets by the transmission band restriction value indicated by the signature, and sends the signature to another adjacent repeater device on an upstream side. In other words, each repeater device that receives a signature repeatedly sends the signature to another repeater device, so that all repeater devices arranged in the network process packets based on the same signature. Thus, a transmission band of a packet passing through each repeater device is restricted to the transmission band restriction value indicated by the signature. Incidentally, an upstream repeater device or a downstream repeater device is a repeater device that is adjacent to the target repeater device, and is located in a direction to which the suspicious attacking packet flows.

When a repeater device detects an attack after a predetermined length of time, the repeater device that detected the attack receives an average input transmission band restriction value, calculates a transmission band restriction adjustment value from a ratio to the average input transmission band restriction value of each adjacent repeater device, and sends the calculated transmission band restriction adjustment value to an adjacent repeater device. The repeater device that received the transmission band restriction adjustment value adjusts a transmission band based on the received transmission band restriction adjustment value, and also sends the transmission band restriction adjustment value to an adjacent repeater device on a further upstream side. In other words, each repeater device that receives the transmission band restriction adjustment value repeatedly sends the transmission band restriction adjustment value, so that all repeater devices arranged in the network receive the same transmission band restriction adjustment value, and adjust a transmission band based on the received transmission band restriction adjustment value.

Patent Document 1: Japanese Published Unexamined Patent Application No. 2003-283554
Patent Document 2: Japanese Published Unexamined Patent Application No. 2003-283572

### DISCLOSURE OF INVENTION

### PROBLEM TO BE SOLVED BY THE INVENTION

However, with the conventional art, when a particular repeater device arranged in the network detects a suspicious attack, a signature is sent to all repeater devices in the network attack protection system. Therefore, the signature is sent even to a repeater device that is not on a communication path of the suspicious attacking packet. Accordingly, a processing load on the repeater devices increases when a suspicious attack is detected.

The present invention has been made to resolve the above issue of the conventional art, and an object thereof is to provide a repeater device a relaying method, a relaying program, and a network attack protection system that can reduce a processing load on the repeater devices arranged in a network, and efficiently perform a packet restriction processing.

### MEANS FOR SOLVING PROBLEM

To solve the above problems and to achieve the above objects, the invention according to claim 1 is a repeater device that receives from an adjacent repeater device a signature for controlling a passage of a packet and sends the signature received to another adjacent repeater device, wherein the repeater device determines whether to send the signature to the another adjacent repeater device based on the signature received from the adjacent repeater device, and sends the signature received from the adjacent repeater device to the another adjacent repeater device when the repeater device determines that the signature is to be sent to the another adjacent repeater device.

According to the invention in claim 2, in the above invention, the repeater device further includes an attack presence determining unit that monitors whether there is a packet that satisfies a condition of the signature received from the adjacent repeater device, and determines whether there is an attack by the packet, and a signature sending unit that sends the signature received from the adjacent repeater device to the another adjacent repeater device when the attack presence determining unit determines that there is an attack.

According to the invention in claim 3, in the above invention, the attack presence determining unit includes a packet number determining unit that determines whether a number of packets that satisfy a condition of the signature received from the adjacent repeater device within a unit time exceeds a predetermined threshold, and the signature sending unit sends the signature received from the adjacent repeater device to the another adjacent repeater device when the packet number determining unit determines that the number of packets within the unit time exceeds the predetermined threshold.

According to the invention in claim 4, in the above invention, the attack presence determining unit further includes a continuous exceeding number determining unit that determines, when the packet number determining unit determines that the number of packets within the unit time exceeds the predetermined threshold, whether a number of times that the predetermined threshold is continuously exceeded exceeds a predetermined value, and the signature sending unit sends the signature received from the adjacent repeater device to the another adjacent repeater device when the continuous exceeding number determining unit determines that the number of times exceeds the predetermined value.

According to the invention in claim 5, in the above inventions, the signature sending unit sends the signature to another adjacent repeater device other than the adjacent repeater device from which the signature is received among all adjacent repeater devices.

According to the invention in claim 6, in the above invention, the repeater device further includes a signature storage unit that stores the signature received, a signature registration determining unit that determines whether the signature received from the adjacent repeater device is already registered in the signature storage unit, and a signature communicating unit that registers the signature received from the adjacent repeater device in the signature storage unit when the identification information determining unit determines that the signature is not yet registered, and sends the signature to the another adjacent repeater device.

According to the invention in claim 7, in the above invention, the signature storage unit stores the signature in correspondence with generation identification information that uniquely identifies each signature generated, the signature registration determining unit determines whether generation identification information of the signature received from the adjacent repeater device is already registered in the signature storage unit, and the signature communicating unit registers the signature and the generation identification information received from the adjacent repeater device in the signature storage unit when the signature registration determining unit determines that the generation identification information is not yet registered in the signature storage unit, and sends the signature and the generation identification information received to the another adjacent repeater device.

According to the invention in claim 8, in the above invention, the repeater device further includes a signature generating unit that generates, when a suspicious attacking packet is detected, a signature and generation identification information of the signature, wherein the signature generating unit sends the signature and the generation identification information to the another adjacent repeater device, and registers relay destination information that specifies an adjacent repeater device that is a relay destination, the generation identification information, and the signature in correspondence with each other in the signature storage unit.

According to the invention in claim 9, in the above invention, when the signature registration determining unit determines that the generation identification information of the signature received from the adjacent repeater device is not yet registered in the signature storage unit, the signature communicating unit sends the signature and the generation identification information received from the adjacent repeater device to the another adjacent repeater device, and registers relay source information that specifies an adjacent repeater device that is a relay source immediately before the signature, relay destination information that specifies an adjacent repeater device that is a relay destination immediately after the signature, the generation identification information, and the suspicious signature in correspondence with each other in the signature storage unit, the signature registration determining unit further determines, when the generation identification information of the signature received from the adjacent repeater device is already registered in the signature storage unit, whether relay source information registered in correspondence with the generation identification information is same as relay source information of the signature received from the adjacent repeater device, and when the signature registration determining unit determines that the generation identification information is already registered in the signature storage unit but the relay source information of the signature received is same as the relay source information registered, the signature communicating unit registers the signature received from the adjacent repeater device over the signature registered in the signature storage unit, and sends the signature received to another adjacent repeater device indicated by the relay destination information registered in the signature storage unit.

According to the invention in claim 10, in the above invention, the signature communicating unit returns, when the signature registration determining unit determines that the relay source information of the signature received is different from the relay source information of the signature registered, an already registered notification indicating that the signature is already registered to the adjacent repeater device that is the relay source of the signature, and deletes, when the already registered notification is received from another repeater device, relay destination information corresponding to the adjacent repeater device from the relay destination information stored in the signature storage unit.

According to the invention in claim 11, a network attack protection system includes a plurality of repeater devices that receives from an adjacent repeater device a signature for controlling a passage of a packet and sends the signature received to another adjacent repeater device, wherein each of the repeater devices includes an attack presence determining unit that monitors whether there is a packet that satisfies a condition of the signature received from the adjacent repeater device, and determines whether there is an attack by the packet, and a signature sending unit that sends the signature received from the adjacent repeater device to the another adjacent repeater device when the attack presence determining unit determines that there is an attack.

According to the invention in claim 12, a network attack protection system includes a plurality of repeater devices that receives from an adjacent repeater device a signature, controls a passage of a packet, registers the signature received in a signature storage unit to control the passage of the packet, and sends the signature received to another adjacent repeater device, wherein each of the repeater devices includes a signature registration determining unit that determines whether the signature received from the adjacent repeater device is already registered in the signature storage unit, and a signature communicating unit that registers the signature received from the adjacent repeater device in the signature storage unit when the identification information determining unit determines that the signature is not yet registered, and sends the signature to the another adjacent repeater device.

According to the invention in claim 13, a relaying method performed by a repeater device that receives from an adjacent repeater device a signature for controlling a passage of a packet and sends the signature received to another adjacent repeater device, the relaying method comprising an attack presence determining step of monitoring whether there is a packet that satisfies a condition of the signature received from the adjacent repeater device, and determining whether there is an attack by the packet, and a signature sending step of sending the signature received from the adjacent repeater device to the another adjacent repeater device when it is determined at the attack presence determining step that there is an attack.

According to the invention in claim 14, in the above invention, the attack presence determining step includes a packet number determining step of determining whether a number of packets that satisfy a condition of the signature received from the adjacent repeater device within a unit time exceeds a predetermined threshold, and the signature received from the adjacent repeater device is sent to the another adjacent repeater device at the signature sending step when it is determined at the packet number determining step that the number of packets within the unit time exceeds the predetermined threshold.

According to the invention in claim 15, in the above invention, the attack presence determining step further includes a continuous exceeding number determining step of determining whether a number of times that the predetermined threshold is continuously exceeded exceeds a predetermined value when it is determined at the packet number determining step that the number of packets within the unit time exceeds the predetermined threshold, and the signature received from the adjacent repeater device is sent to the another adjacent repeater device at the signature sending step when it is determined at the continuous exceeding number determining step that the number of times exceeds the predetermined value.

According to the invention in claim 16, in the above inventions, the signature is sent to another adjacent repeater device other than the adjacent repeater device from which the signature is received among all adjacent repeater devices at the signature sending step.

According to the invention in claim 17, a relaying method for receiving from an adjacent repeater device a signature for controlling a passage of a packet, registering the signature received in a signature storage unit, controlling the passage of the packet, and sending the signature received to another adjacent repeater device, includes a signature registration determining step of determining whether the signature received from the adjacent repeater device is already registered in the signature storage unit, and a signature communicating step of registering the signature received from the adjacent repeater device in the signature storage unit when it is determined at the identification information determining step that the signature is not yet registered, and sends the signature to the another adjacent repeater device.

According to the invention in claim 18, in the above invention, the signature storage unit stores the signature in correspondence with generation identification information that uniquely identifies each signature generated, the signature registration determining step includes determining whether generation identification information of the signature received from the adjacent repeater device is already registered in the signature storage unit, and the signature communicating step includes registering the signature and the generation identification information received from the adjacent repeater device in the signature storage unit when it is determined at the signature registration determining step that the generation identification information is not yet registered in the signature storage unit, and sending the signature and the generation identification information received to the another adjacent repeater device.

According to the invention in claim 19, in the above invention, the relaying method further includes a signature generating step of generating, when a suspicious attacking packet is detected, a signature and generation identification information of the signature, wherein the signature and the generation identification information is sent to the another adjacent repeater device, and relay destination information that specifies an adjacent repeater device that is a relay destination, the generation identification information, and the signature are registered in correspondence with each other in the signature storage unit at the signature generating step.

According to the invention in claim 20, a relaying program causes a computer to function as a repeater device that receives from an adjacent repeater device a signature for controlling a passage of a packet and sends the signature received to another adjacent repeater device, the relaying program causing the repeater device to execute an attack presence determining step of monitoring whether there is a packet that satisfies a condition of the signature received from the adjacent repeater device, and determining whether there is an attack by the packet, and a signature sending step of sending the signature received from the adjacent repeater device to the another adjacent repeater device when it is determined at the attack presence determining step that there is an attack.

According to the invention in claim 21, in the above invention, the attack presence determining step includes a packet number determining step of determining whether a number of packets that satisfy a condition of the signature received from the adjacent repeater device within a unit time exceeds a predetermined threshold, and the signature received from the adjacent repeater device is sent to the another adjacent repeater device at the signature sending step when it is determined at the packet number determining step that the number of packets within the unit time exceeds the predetermined threshold.

According to the invention in claim 22, in the above invention, the attack presence determining step further includes a continuous exceeding number determining step of determining whether a number of times that the predetermined threshold is continuously exceeded exceeds a predetermined value when it is determined at the packet number determining step that the number of packets within the unit time exceeds the predetermined threshold, and the signature received from the adjacent repeater device is sent to the another adjacent repeater device at the signature sending step when it is determined at the continuous exceeding number determining step that the number of times exceeds the predetermined value.

According to the invention in claim 23, in the above invention, the signature is sent to another adjacent repeater device other than the adjacent repeater device from which the signature is received among all adjacent repeater devices at the signature sending step.

According to the invention in claim 24, a relaying program causes a computer to function as a repeater device that receives from an adjacent repeater device a signature for controlling a passage of a packet, registers the signature received in a signature storage unit, controlling the passage of the packet, and sends the signature received to another adjacent repeater device, the relaying program causing the repeater device to execute a signature registration determining step of determining whether the signature received from the adjacent repeater device is already registered in the signature storage unit, and a signature communicating step of registering the signature received from the adjacent repeater device in the signature storage unit when it is determined at the identification information determining step that the signature is not yet registered, and sends the signature to the another adjacent repeater device.

According to the invention in claim 25, in the above invention, the signature storage unit stores the signature in correspondence with generation identification information that uniquely identifies each signature generated, the signature registration determining step includes determining whether generation identification information of the signature received from the adjacent repeater device is already registered in the signature storage unit, and the signature communicating step includes registering the signature and the generation identification information received from the adjacent repeater device in the signature storage unit when it is determined at the signature registration determining step that the generation identification information is not yet registered in the signature storage unit, and sending the signature and the generation identification information received to the another adjacent repeater device.

According to the invention in claim 26, in the above invention, a signature generating step of generating, when a suspicious attacking packet is detected, a signature and generation identification information of the signature, wherein the signature generating step includes sending the signature and the generation identification information to the another adjacent repeater device, and registering relay destination information that specifies an adjacent repeater device that is a relay destination, the generation identification information, and the signature in correspondence with each other in the signature storage unit.

### EFFECT OF THE INVENTION

With the invention of claim 1, a repeater device determines whether to send a signature received to the another adjacent repeater device based on the signature received from the adjacent repeater device, and sends the signature received from the adjacent repeater device to the another adjacent repeater device when the repeater device determines that the signature is to be sent to the another adjacent repeater device. Thus, the invention prevents a signature from being redundantly sent between repeater devices, and prevents a signature from being sent to all repeater devices arranged in a network. Therefore, a processing load on the repeater devices is reduced, and a packet restriction processing is efficiently performed.

With the invention of claim 2, 11, 13, or 20, the repeater device monitors whether there is a packet that satisfies a condition of the signature received from the adjacent repeater device, determines whether there is an attack by the packet, and sends the signature received from the adjacent repeater device to the another adjacent repeater device when it is determined that there is an attack. Thus, the invention prevents a signature from being sent to all repeater devices arranged in a network. Therefore, a processing load on the repeater devices is reduced, and a packet restriction processing is efficiently performed.

With the invention of claim 3, 14, or 21, the signature received from the adjacent repeater device is sent to the another adjacent repeater device when it is determined that a number of packets that satisfy a condition of the signature received from the adjacent repeater device within a unit time exceeds a predetermined threshold. Therefore, it can be objectively and reliably determined as to whether there is an attack.

With the invention of claim 4, 15, or 22, the repeater device does not immediately determine that there is an attack when a number of packets that satisfy a condition of the signature within a unit time exceeds a predetermined threshold, but determines that there is an attack when a number of times that the predetermined threshold is continuously exceeded exceeds a predetermined value. Therefore, it can be further reliably determined as to whether there is an attack.

With the invention of claim 5, 16, or 23, the signature is sent to another adjacent repeater device other than the adjacent repeater device from which the signature is received. Therefore, a signature is prevented from being sent to a repeater device that is already performing a packet restriction processing, so that a processing load on the repeater devices arranged in a network is reduced, and a packet restriction processing can be efficiently performed.

With the invention of claim 6, 12, 17, or 24, the repeater device determines whether the signature received from the adjacent repeater device is already registered, registers the signature in a signature storage unit (signature list) when it is determined that the signature is not yet registered, and sends the signature to the another adjacent repeater device. Accordingly, the repeater device can avoid redundantly registering or redundantly sending the same signature, and efficiently perform processings for restricting packets based on a signature.

With the invention of claim 7, 18, or 25, the repeater device manages generation identification information (generation identification information including an identifier that uniquely identifies each repeater device that is a generation source, and an identifier that uniquely identifies each suspicious signature among the plurality of suspicious signatures generated by the repeater device) for uniquely identifying each signature generated in correspondence with each signature. Thus, the repeater device can determine whether a signature is already registered based on only the generation identification information, without referring to specific contents of the signature. Furthermore, when the signature has the same contents as a registered signature, but has different generation identification information (generation source) from the registered signature, the repeater device determines that the signature is not yet registered, and registers the signature in the signature list and sends the signature to an adjacent repeater device. Thus, differences in performance (for example, ability of detecting an attack or an algorithm for releasing protection) between each repeater device, which is a generation source, are considered, so that packets can be controlled in a highly safe manner.

With the invention of claim 8, 19, or 26, when a suspicious attacking packet is detected, the repeater device generates a signature and generation identification information, sends the signature and the generation identification information to an adjacent repeater device, and registers in the signature list relay destination information for specifying an adjacent repeater device that is a relay destination, in correspondence with the suspicious signature and the identification information. Thus, a signature can surely be provided with generation identification information. Furthermore, when a sending error occurs or when contents of the signature are updated, and it is necessary to send again the signature, the repeater device references relay destination information, generation identification information, and a signature registered in the signature list so that a signature given the same generation identification information can surely be sent again to the same relay destination.

With the invention of claim 9, when identification information of a signature received from an adjacent repeater device is not yet registered in the signature list, the repeater device sends the signature to another adjacent repeater device, and registers in the signature list relay source information for specifying an adjacent repeater device that is a relay source immediately before the signature, and relay destination information for specifying an adjacent repeater device that is a relay destination immediately after the signature in correspondence with the generation identification information and the signature. When the generation identification information of the signature received from the adjacent repeater device is already registered in the signature list, the repeater device further determines whether the relay source information is the same. When the relay source information is the same, the repeater device registers the received signature over the registered signature in the signature list, and sends the signature to another adjacent repeater device indicated by the relay destination information registered in the signatures list. Thus, when the same signature is received again because a sending error occurred or contents of the signature are updated, the signature is surely sent to a relay destination without being stopped. On the other hand, when the relay source information is different, the repeater device determines that the signature is not sent again, so that the repeater device can surely avoid redundantly registering or redundantly sending the same signature.

With the invention of claim 10, when generation identification information of a signature received from an adjacent repeater device is already registered in the signature list, and relay source information of the received signature is different from that of the registered signature, the repeater device returns an already registered notification indicating that the signature is already registered in the adjacent repeater device corresponding to the relay source of the received signature. When the already registered notification is received from another adjacent repeater device, the repeater device deletes relay destination information corresponding to the adjacent repeater device from the relay destination information stored in the signature list. Thus, when it is necessary to send again the same signature because a sending error occurred or contents of the signature are updated, the signature is not sent to a relay destination deleted from the signature list, so that the repeater device can surely avoid redundantly registering or redundantly sending the same signature when sending again the signature.

### BRIEF DESCRIPTION OF DRAWINGS

Fig. 1 is a schematic for explaining a network attack protection system according to a first embodiment of the present invention;
Fig. 2 is a detailed block diagram of a repeater device according to the first embodiment shown in Fig. 1;
Fig. 3 is a schematic for explaining contents of a suspicious attack detection condition table;
Fig. 4 is a schematic for explaining contents of an illegitimate traffic detection condition table;
Fig. 5 is a schematic for explaining contents of a legitimacy condition table;
Fig. 6 is a flowchart of a processing procedure for detecting a suspicious attacking packet;
Fig. 7 is a flowchart of a processing procedure for receiving a signature;
Fig. 8 is a flowchart of a processing procedure for detecting an illegitimate packet;
Fig. 9 is a flowchart of a processing procedure for controlling a packet;
Fig. 10 is a schematic for explaining a network attack protection system according to a second embodiment of the present invention;
Fig. 11 is a detailed block diagram of a repeater device according to the second embodiment shown in Fig. 10;
Fig. 12 is a schematic for explaining contents of a suspicious attack detection condition table;
Fig. 13 is a schematic for explaining contents of an illegitimate traffic detection condition table;
Fig. 14 is a schematic for explaining contents of a legitimacy condition table;
Fig. 15 is a schematic for explaining contents of a signature list;
Fig. 16 is a schematic for explaining identification information given to a signature;
Fig. 17 is a flowchart of a processing procedure for detecting a suspicious attacking packet;
Fig. 18 is a flowchart of a processing procedure for receiving a signature;
Fig. 19 is a flowchart of a processing procedure for detecting an illegitimate packet;
Fig. 20 is a flowchart of a processing procedure for controlling a packet;
Fig. 21 is a block diagram of a repeater device according to a third embodiment;
Fig. 22 is a flowchart of a processing procedure for detecting a suspicious attacking packet;
Fig. 23 is a flowchart of a processing procedure for receiving a signature;
Fig. 24 is a schematic for explaining a network attack protection system according to the conventional technology; and
Fig. 25 is a schematic for explaining another network attack protection system according to the conventional technology.

### EXPLANATIONS OF LETTERS OR NUMERALS

- 10: repeater device
- 11: network interface
- 12: packet acquiring unit
- 13: attack detecting unit
- 14: signature communicating unit (signature sending unit)
- 15a, 215b: packet number determining unit
- 15b, 215c: continuous exceeding number determining unit
- 16: filtering unit
- 20: server
- 30: communications terminal
- 100, 100a: network attack protection system
- 110: repeater device
- 111: network interface
- 112: packet acquiring unit
- 113: attack detecting unit
- 114: signature communicating unit
- 115, 215a: identification information determining unit
- 116: filtering unit
- 120: server
- 130: communications terminal

### BEST MODE(S) FOR CARRYING OUT THE INVENTION

Exemplary embodiments of a repeater device, a relaying method, a relaying program, and a network attack protection system according to the present invention will now be described in detail with reference to the attached drawings. A first embodiment describes a case of restricting a transfer processing of a signature by a predetermined threshold, and a second embodiment describes a case of restricting a transfer processing of a signature by generation identification information of the signature. A third embodiment describes a case of combining the packet restriction processings of the first embodiment and the second embodiment.

A summary of a relaying method is given below, before describing the embodiments. The main feature of the relaying method according to an aspect of the present invention is that when a repeater device receives a signature, the signature is not automatically transferred to another adjacent repeater. Instead, the repeater device determines whether to transfer the signature, and the signature is transferred to another adjacent repeater device only when the repeater device determines to transfer the signature.

For example, the received signature is transferred to another repeater device only when a number of packets within a unit time exceeds a predetermined threshold, or when a number of times that the predetermined threshold is continuously exceeded exceeds a predetermined value. In another example, generation identification information is given to each signature for uniquely identifying each signature generated, and the received signature is transferred to another repeater device only when the generation identification information satisfies a predetermined condition.

Accordingly, the relaying method prevents a signature from being redundantly sent between repeater devices, and prevents a signature from being sent to all repeater devices arranged in a network. Therefore, a processing load on the repeater devices is reduced, and a packet restriction processing is efficiently performed.

### [Embodiment 1]

The first embodiment describes a case of restricting a transfer processing of a signature by a predetermined threshold. In the following, the principal terms used in the description of the first embodiment, an outline and characteristics of the network attack protection system, the arrangement and processes of the repeater device, and the effects of the first embodiment will be described in that order, and lastly, various modification examples of the first embodiment will be described.

### [Description of Terms]

First, the principle terms used in the description of the first embodiment will be described. A "suspicious signature," used in the first embodiment, is a signature for restricting a packet suspected of being an attack packet (suspicious attacking packet) and is specifically arranged by defining attributes (such as a destination IP address, protocol, destination port No., etc.) that indicate characteristics of the suspicious attacking packet, the passage of which is to be restricted, and restriction details (such as restriction information for restricting the band when a specific packet flows in).

A "legitimate signature," used in the first embodiment is a signature for enabling the passage of a legitimate packet (a legitimate packet that is a communication packet of a legitimate user), among packets corresponding to a suspicious signature, that is deemed not to be an attack packet, and is specifically arranged by defining attributes (such as the source IP address, service type, destination IP address, protocol, destination port No., etc.) that indicate characteristics of the legitimate packet, the passage of which is to be enabled.

An "illegitimate signature," used in the first embodiment is a signature for restricting an illegitimate packet included among illegitimate traffic (a packet that meets illegitimate traffic conditions), and is specifically arranged by defining the source IP address, etc., of the illegitimate packet.

### [Outline and Characteristics of the System]

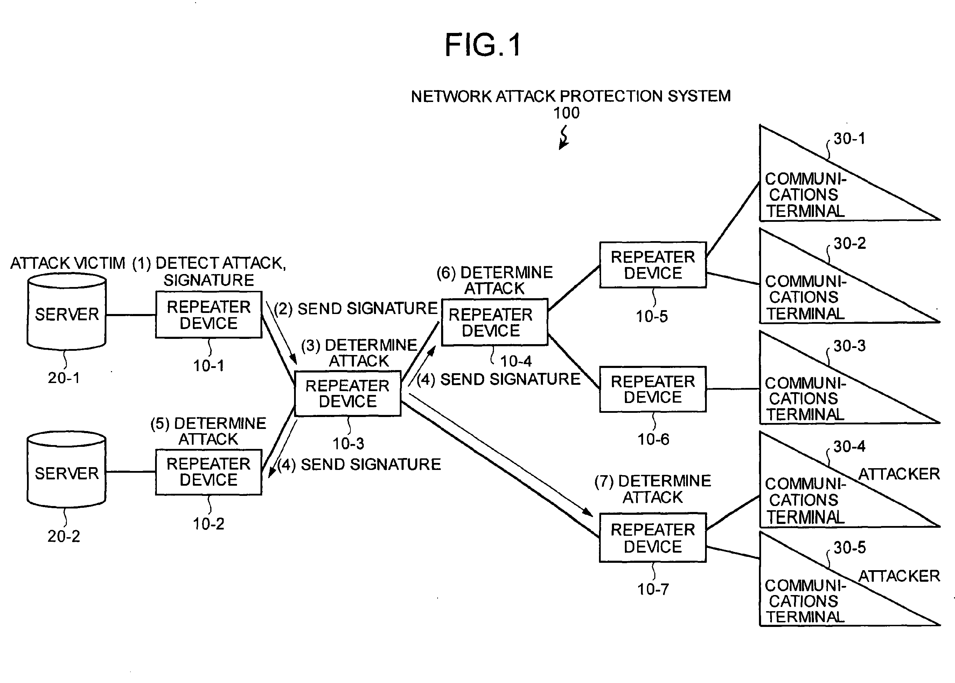

An outline and characteristics of the network attack protection system of the first embodiment will now be described using Fig. 1. Fig. 1 is a schematic for explaining the network attack protection system of the first embodiment.

The network attack protection system 100 includes a plurality of repeater devices 10 arranged in a network. Servers 20, which are computers subject to DoS attacks and DDoS attacks, and communications terminals 30, which are computers that can carry out the DoS attacks and DDoS attacks, are connected to the network. In the following description, the repeater devices 10 will be referred to as repeater devices 10-1 to repeater devices 10-7 when the repeater devices 10 are to be distinguished respectively, the servers 20 will be referred to as servers 20-1 and server 20-2 when the servers 20 are to be distinguished respectively, and the communications terminals 30 will be referred to as communications terminal 30-1 to communications terminal 30-5 when the communications terminals are to be distinguished respectively.

In the network attack protection system 100, upon detecting that at least one communications terminal 30 among the communications terminals 30 is carrying out a DoS attack or a DDoS attack on a server 20 on the network, a repeater device 10 generates signatures (suspicious signature and illegitimate signature) for restricting the passage of packets and legitimate signatures for enabling the passage of packets. The repeater device 10 then registers the signatures (suspicious signature, illegitimate signature, and legitimate signature) that it has generated on its own in a signature list.

The repeater device 10 also sends the generated suspicious signature (and the legitimacy conditions used to generate the legitimate signature) to adjacent repeater devices. Meanwhile, upon receiving a suspicious signature, etc., from an adjacent repeater device, the repeater device 10 generates a legitimate signature based on the legitimacy conditions and registers the received suspicious signature and the generated legitimate signature in the signature list, and then sends the received suspicious signature, etc. to another adjacent repeater device. To cite examples of adjacent repeater devices, in Fig. 1, the adjacent repeater devices of the repeater device 10-3 are the repeater device 10-1, the repeater device 10-2, the repeater device 10-4, and the repeater device 10-7, and the repeater device 10-5 and the repeater device 10-6 are not in an adjacency relationship with respect to the repeater device 10-3. The adjacency relationship does not signify physical adjacency.

The repeater device 10 thus controls the passage of packets based on signatures registered in the signature list. That is, a packet corresponding to an illegitimate signature or a suspicious signature is passed upon restricting the transmission band or is discarded, and a packet corresponding to a legitimate signature or a packet not corresponding to any signature is enabled to pass without restriction of the transmission band.

The repeater device 10 is a device that relays packets while protecting against attacks and may function, for example, as a router or a bridge. The repeater device 10 may be connected to a management network for managing the repeater device 10, etc., and the signatures may be sent and received via the management network.

Thus, the repeater device 10 not only controls packets by generating signatures, etc., on its own, for controlling passage of packets, but also sends the generated signature to adjacent repeater devices. Furthermore, when the repeater device 10 receives a signature from an adjacent repeater device, the repeater device 10 controls packets based on the signature, and sends the signature to other adjacent repeater devices. The main feature of the repeater device 10 according to the first embodiment is a processing performed when sending a signature received from an adjacent repeater device to another adjacent repeater device. Specifically, the repeater device 10 determines whether there is an attack by monitoring whether a packet satisfies a condition of a signature received from an adjacent repeater device, and only when it is determined that there is an attack, the repeater device 10 sends the signature to an adjacent repeater device.

The main feature is briefly described with reference to Fig. 1. As shown in Fig. 1, for example, when the communications terminal 30-4 and the communications terminal 30-5 are performing DoS attacks on the server 20-1, and the repeater device 10-1 detects a suspicious attack, the repeater device 10-1 generates a suspicious signature for restricting a suspicious attacking packet, performs a processing on packets based on the generated suspicious signature, and sends the suspicious signature (and legitimacy conditions) to the repeater device 10-3 that is an adjacent repeater device (refer to (1) and (2) in Fig. 1) .

Meanwhile, the repeater device 10-3 receives the suspicious signature from the repeater device 10-1, performs a processing on packets based on the received suspicious signature, and determines whether a number of packets satisfying a condition of the received suspicious signature exceeds a predetermined threshold within a unit time (refer to (3) in Fig. 1). In other words, the repeater device 10-3 determines whether there is an attack by monitoring whether an attack corresponding to the suspicious signature is performed through the repeater device 10-3.

As a result of the determination, when the number of packets satisfying the condition of the received suspicious signature exceeds the predetermined threshold within the unit time, the repeater device 10-3 sends the suspicious signature received from the repeater device 10-1 to another adjacent repeater device (refer to (4) in Fig. 1). The repeater device 10-3 sends the suspicious signature to all adjacent repeater devices excluding the adjacent repeater device (the repeater device 10-1) that sent the suspicious signature to itself (the repeater device 10-3), i.e., to the repeater device 10-2, the repeater device 10-4, and the repeater device 10-7. In the example shown in Fig. 1, the communications terminal 30-4 and the communications terminal 30-5 attack the server 20-1, and therefore, the repeater device 10-3 determines that "there is an attack".

The repeater device 10-4 and the repeater device 10-2 receive the suspicious signature from the repeater device 10-3, perform a processing on packets based on the received suspicious signature, and similarly to the above, determine whether an attack corresponding to the suspicious signature is performed through the repeater device 10-4 and the repeater device 10-2 (refer to (5) and (6) in Fig. 1). In the example shown in Fig. 1, the communications terminal 30-4 and the communications terminal 30-5 attack the server 20-1, and therefore, the repeater device 10-4 and the repeater device 10-2 determine that a number of packets that satisfy the condition of the received suspicious signature within a unit time does not exceed the predetermined threshold (in other words, determine that "there is no attack"). Accordingly, the suspicious signature is not sent to adjacent repeater devices.

Meanwhile, similarly to the repeater device 10-4 and the repeater device 10-2, the repeater device 10-7 receives the suspicious signature from the repeater device 10-3, performs a processing on packets based on the received suspicious signature, and determines whether an attack corresponding to the suspicious signature is performed through the repeater device 10-7. However, there are no repeater devices adjacent to the repeater device 10-7 other than the repeater device from which the suspicious signature is received, and therefore, the suspicious signature is not sent to any other repeater device (refer to (7) in Fig. 1).

As described above, in the network attack protection system 100, among the plurality of repeater devices 10, the repeater device 10-1, the repeater device 10-3, and the repeater device 10-7 restrictingly relay packets sent from the communications terminal 30-4 and the communications terminal 30-5 based on the suspicious signature. In other words, among the repeater devices 10 in the network attack protection system 100, a suspicious signature is not sent to the repeater device 10-5 or the repeater device 10-6 (a suspicious signature is not sent to all repeater devices 10). Therefore, a processing load on the repeater devices 10 can be reduced when a suspicious attack is detected, etc.

The signature sent by the repeater device 10 is not limited to the suspicious signature; the repeater device 10 can send another signature instead of the suspicious signature, or another signature in addition to the suspicious signature.

### [Arrangement of the Repeater device]

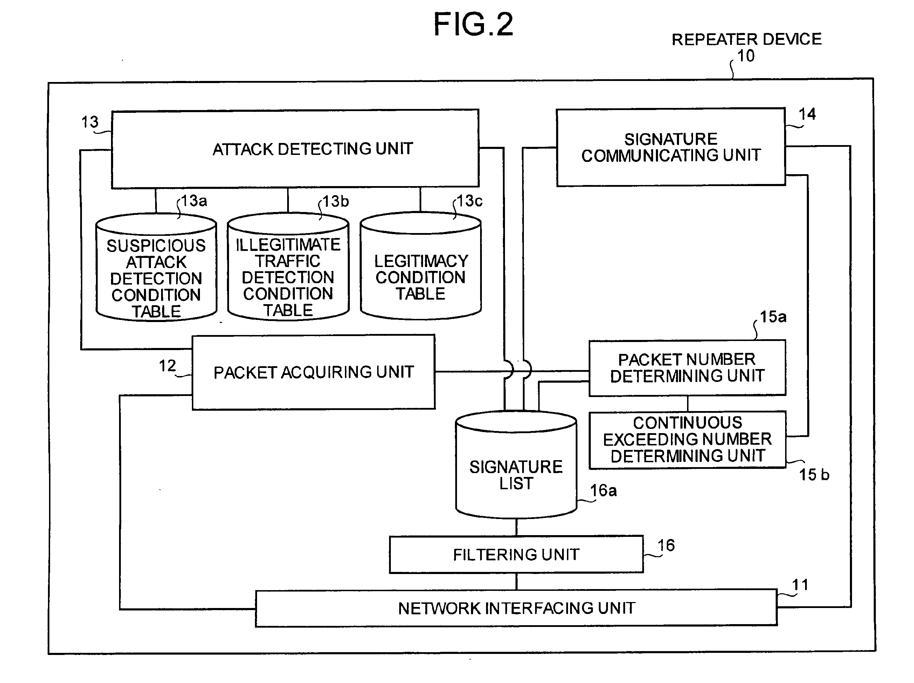

The arrangement of the repeater device 10 shown in Fig. 1 will now be described using Fig. 2. Fig. 2 is a detailed block diagram of the repeater device 10. The repeater device 10 includes a network interfacing unit 11, a packet acquiring unit 12, an attack detecting unit 13 (and a suspicious attack detection condition table 13a, an illegitimate traffic detection condition table 13b, and a legitimacy condition table 13c), a signature communicating unit 14, a packet number determining unit 15a, a continuous exceeding number determining unit 15b, and a filtering unit 16 (and a signature list 16a).

The repeater device 10 may have a CPU (Central Processing Unit), a memory, a hard disk, etc., and the packet acquiring unit 12, the attack detecting unit 13, the signature communicating unit 14, the packet number determining unit 15a, the continuous exceeding number determining unit 15b, and the filtering unit 16 may be program modules that are processed by the CPU. These program modules may be processed by a single CPU or may be processed dispersedly by a plurality of CPUs. Linux or other general-purpose OS may be installed in the repeater device 10, and a packet filter provided in the general-purpose OS may be made to function as the filtering unit 16.

The signature communicating unit 14 corresponds to being a "signature sending unit" indicated in the claims, the packet number determining unit 15a corresponds to being an "attack presence determining unit" and a "packet number determining unit" indicated in the claims, and the continuous exceeding number determining unit 15b corresponds to being an "attack presence determining unit" and a "continuous exceeding number determining" indicated in the claims.

In Fig. 2, the network interfacing unit 11 is a unit that sends and receives packets to and from communication equipment connected to the network and is specifically arranged from a network connection card, etc., that is connected to the network, which may be a LAN (Local Area Network), a WAN (Wide Area Network), etc. Though not illustrated in Fig. 2, the repeater device 10 may also be arranged with a monitor (or a display or a touch panel), speakers, and other output units that output various information.

The packet acquiring unit 12 is a processing unit that acquires the packet received by the network interfacing unit 11 and presents statistical information concerning the statistics of the acquired packet to the attack detecting unit 13 and the packet number determining unit 15a.

The attack detecting unit 13 is a processing unit that performs attack detection and attack analysis based on the statistical information provided by the packet acquiring unit 12 and is connected to the suspicious attack detection condition table 13a, the illegitimate traffic detection condition table 13b, and the legitimacy condition table 13c as shown in Fig. 2. The information stored in the respective tables 13a to 13c will now be described and thereafter the details of the processing by the attack detecting unit 13 will be described.

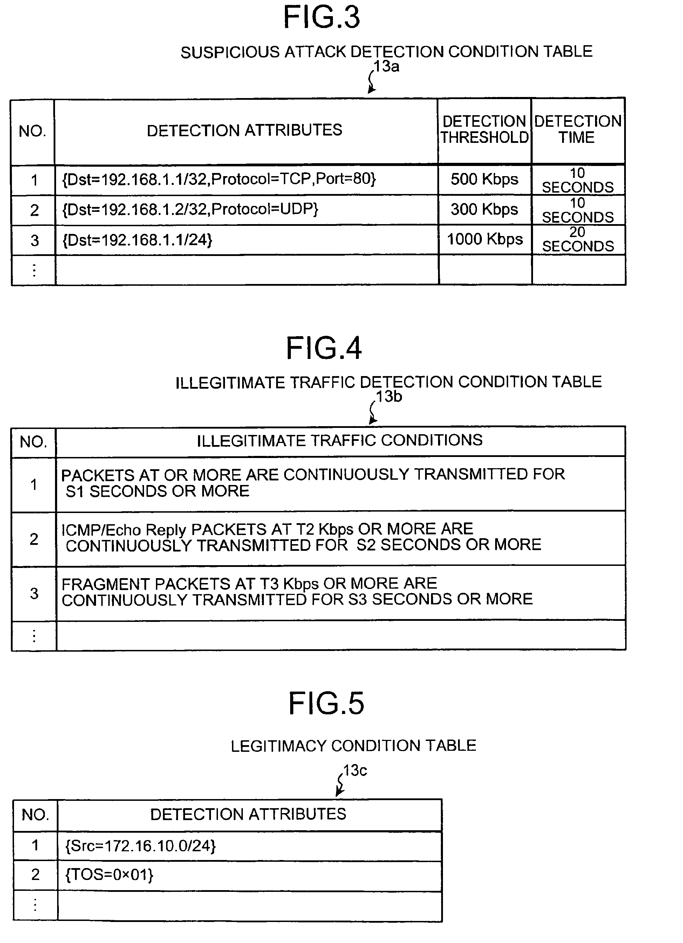

Fig. 3 is a diagram of an example of the information stored in the suspicious attack detection condition table 13a, more specifically, the "suspicious attack detection conditions" that are used to detect suspicious attacking packets that are received packets that have the possibility of being attacking packets. As shown in the figure, the suspicious attack detection conditions are arranged as records of a plurality of sets (three sets in the present example) of combinations of detection attributes, a detection threshold value, and a detection interval, and when a traffic matches the conditions of any record among the respective suspicious attack detection condition records, the communication packet of that traffic is recognized to be a suspicious attacking packet. "No." is used as a matter of convenience for specifying a record.

The attributes of an IP header portion included in an IP packet or the attributes of a TCP header portion or a UDP header portion included in a payload portion of an IP packet are, for example, designated as the "detection attributes" of the suspicious attack detection conditions. Specifically in Fig. 3, the detection attributes of the record of No. 1 are designated by the combination of attribute values in which "Destination IP address" is "192.168.1.1/32" (dst=192.168.1.1/32), "Protocol," which indicates an upper layer (TCP or UDP) protocol type of the IP, is "TCP" (Protocol=TCP), and "Destination Port," which indicates which application the upper layer protocol of the IP is an information of, is "80" (Port=80).

The detection attributes of the record of No. 2 are designated by the combination of attributes values of a "Destination IP address" of "192.168.1.2/32" (dst=192.168.1.2/32) and a "Protocol" of "UDP" (User Datagram Protocol) (Protocol=UDP). Likewise, the detection attribute of the record of No. 3 is designated by the attribute of a "Destination IP Address" of "192.168.1.0/24."

The suspicious attack detection condition of the "detection threshold value" designates the minimum transmission band for detecting the traffic of a received packet with the detection attributes designated by the same record as an attack suspect traffic, and the suspicious attack detection condition of the "detection interval" likewise designates the minimum continuous duration. Though not shown in Fig. 3, a set of attributes values, in which the "Destination IP Address" is unconditional ("any") and the "Protocol," which indicates the upper layer protocol type of the IP, is "ICMP (Internet Control Message Protocol)," may be designated as the detection attributes.

Fig. 4 is a diagram of an example of information stored in the illegitimate traffic detection condition table 13b, more specifically, the "illegitimate traffic conditions" that are used for detecting illegitimate traffic from the traffic of a suspicious attacking packet. As shown in the figure, the illegitimate traffic conditions are arranged from a plurality of known traffic patterns of DDoS attacks, and when the traffic of a suspicious attacking packet matches any of the traffic patterns, the traffic is recognized to be an illegitimate traffic. "No." is used as a matter of convenience for specifying a record (pattern).

Specifically, the illegitimate traffic conditions of No. 1 indicate a traffic pattern, in which "a packet of a transmission band of no less than T1 Kbps is being sent continuously for no less than S1 seconds." The illegitimate traffic conditions of No. 2 indicate a traffic pattern, in which "an ICMP (Internet Control Message Protocol) echo reply message packet of a transmission band of no less than T2 Kbps is being sent continuously for no less than S2 seconds." The illegitimate traffic conditions of No. 3 indicate a traffic pattern, in which "a fragment packet of a transmission band of no less than T3 Kbps that indicates that the data included in the packet are sent upon being partitioned among a plurality of IP packets due to the data being too long is being sent continuously for no less than S3 seconds."

Fig. 5 is a diagram of an example of information stored in the legitimacy condition table 13c, more specifically, the "legitimacy conditions" that express packets sent from a communications terminal used by a legitimate user. As shown in the figure, the legitimacy conditions are arranged from records, each of which is a combination of attributes of IP packets and the attribute values. "No." is used as a matter of convenience for specifying a record (pattern).

Specifically, the detection attribute of the record of No. 1 designates that the "Source IP Address" of the IP is "172.16.10.0/24" (src=172.16.10.0/24), and the detection attribute of the record of No. 2 designates that "Type of Service," which indicates the service quality on the IP, is "01 (in hexadecimal notation)" (TOS=Ox01). As such legitimacy conditions, for example, the source IP addresses of servers 20 of branches of a firm of a server owner and related firms that are to be protected and the source IP addresses of a network, which the owner of a LAN that includes servers 20 recognizes as being that of a legitimate user, are set.

Returning now to Fig. 2, when an attack is detected based on the statistical information provided by the packet acquiring unit 12, the attack detecting unit 13 generates a suspicious signature for restricting the communication packet (suspicious attacking packet) of the attack suspect traffic. Specifically, in accordance with the suspicious attack detection conditions shown in Fig. 3, the attack detecting unit 13 checks for traffic that continues for a longer duration than that designated by the detection interval, uses a transmission band that is no less than that designated by the detection threshold value, and matches the detection attributes, and when a traffic is found to match any of the records, the traffic is detected as an attack suspect traffic, and the suspicious signature is generated from the detection attributes of the suspicious attack detection condition record that the detected attack suspect traffic matches.

Also, when an attack is detected, the attack detecting unit 13 generates legitimate signatures along with the suspicious signature. Specifically, the legitimacy conditions shown in Fig. 5 are referenced, and the legitimate signatures are generated by subjecting each of the legitimacy condition records to an AND operation with the suspicious signature. These legitimate signatures are used to release legitimate packets, which are communication packets of legitimate users, from the restriction by the suspicious signature, and with the example of Figs. 3 and 5, the suspicious signature of a packet detected by the conditions of the record of No. 1 in Fig. 3 is "dst=192.168.1.1/32, Protocol=TCP, Port=80," and in Fig. 5, the legitimate signatures are "src=172.16.10.24, dst=192.168.1.1/32, Protocol=TCP, Port=80," and "TOS=0x01, dst=192.168.1.1/32, Protocol=TCP, Port=80."

Furthermore, when a traffic matching any of the patterns among the illegitimate traffic conditions shown in Fig. 4 is detected, the attack detecting unit 13 generates an illegitimate signature for restricting illegitimate traffic. Specifically, the source IP address of a packet that meets the detected illegitimate traffic conditions is specified as an illegitimate address range, and the conditions of being in the illegitimate address range and matching the suspicious signature are generated in the form of the illegitimate signature.

The suspicious signature, legitimate signatures, and illegitimate signature generated by the attack detecting unit 13 are registered in the signature list 16a by a process of the priority order determining unit 15 to be described later. Besides the signatures generated by the attack detecting unit 13, the signatures (suspicious signatures, legitimate signatures, and illegitimate signatures) registered in the signature list 16a include signatures received from adjacent repeater devices via the signature communicating unit 14 to be described later and signatures (newly set signatures and modified signatures) input from the network manager via the input unit 17.

In Fig. 2, the signature communicating unit 14 is a processing unit that sends the signature, etc., generated by the attack detecting unit 13 to an adjacent repeater device, receives a signature sent from an adjacent repeater device, and sends the signature received from the adjacent repeater device to another adjacent repeater device. The processing of sending the signature received from the adjacent repeater device to another adjacent repeater device is executed according to determination results of the packet number determining unit 15a and the exceeding number determining unit 15b, to be described later.

The packet number determining unit 15a is a processing unit that determines whether a number of packets that satisfy a condition of a signature received by the signature communicating unit 14 within a unit time exceeds a predetermined threshold. Specifically, the packet number determining unit 15a acquires packets that satisfy the condition of the signature for each unit time from statistical information provided by the packet acquiring unit 12, and determines whether a number of the acquired packets exceed a predetermined threshold.

The continuous exceeding number determining unit 15b is a processing unit that determines, when the packet number determining unit 15a determines that the number of packets exceeds the predetermined threshold, whether a number of times the predetermined threshold is continuously exceeded exceeds a predetermined value. When the number of times the predetermined threshold is continuously exceeded exceeds a predetermined value, the continuous exceeding number determining unit 15b outputs an instruction to the signature communicating unit 14 to send a signature received from an adjacent repeater device to another adjacent repeater device. Upon receiving the instruction, the signature communicating unit 14 selects an adjacent repeater device excluding the adjacent repeater device from which the signature is received, and sends the signature to the selected adjacent repeater device.

In Fig. 2, the filtering unit 16 is a processing unit that receives packets received by the network interfacing unit 11 and controls the passage of the packets (the output of the packets from the network interfacing unit 11) based on the signature list 16a. Specifically, the filtering unit 16 determines whether an input packet corresponds to an "illegitimate signature," a "legitimate signature," or a "suspicious signature" registered in the signature list 16a (or does not correspond to any of the above), and controls the passage of packets based on the corresponding signature.

More specifically, the filtering unit 16 inputs packets corresponding to illegitimate signatures into an illegitimate cue for processing illegitimate packets, inputs packets corresponding to suspicious signatures into a suspect cue for suspect users, and inputs packets corresponding to legitimate signatures or not corresponding to any of the signatures into a legitimate cue for legitimate users. The filtering unit 16 then outputs the packets, which were input into the legitimate cue, from the network interfacing unit 11 without restriction of the transmission band, and restrictingly outputs the packets, which were input in the suspect cue and the illegitimate cue, in accordance with the transmission band restriction values indicated by the respective signatures (the signatures that had been selected as those for which the conditions were met).

When the detection attributes, etc., of a signature registered in the signature list 16a meets predetermined cancellation criteria, the filtering unit 16 cancels the signature that meets the predetermined cancellation criteria and stops the process of controlling the passage of packets based on the cancelled signature.

### [Process Performed When a suspicious attacking packet is Detected]

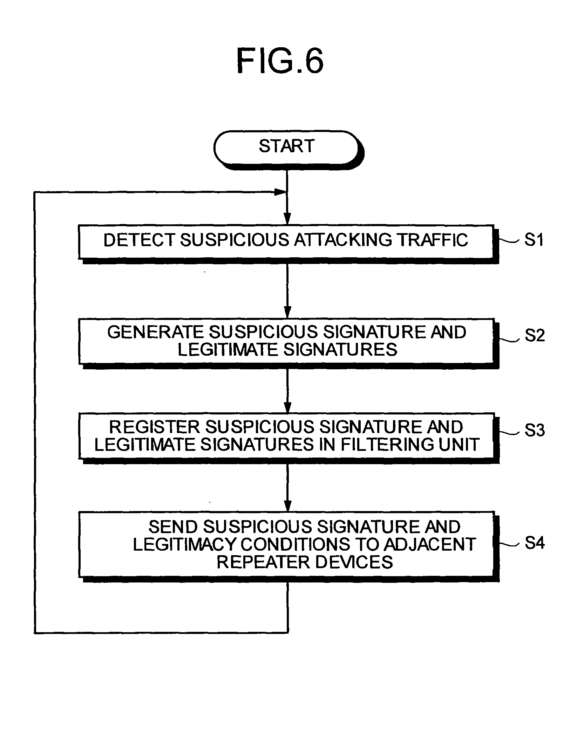

The operation process performed when the repeater device 10 detects a suspicious attacking packet will now be described with reference to Fig. 6. Fig. 6 is a flowchart of the processing procedure performed when a suspicious attacking packet is detected.

As shown in the figure, when the attack detecting unit 13 of the repeater device 10 detects an attack suspect traffic based on the suspicious attack detection condition table 13a shown in Fig. 3 (step S1), the attack detecting unit 13 generates a suspicious signature and legitimate signatures (step S2).

The attack detecting unit 13 registers the generated suspicious signature and the legitimate signatures in the signature list 16a of the filtering unit 16 (step S3). The signature communicating unit 14 sends the signatures, etc. (in the first embodiment, the suspicious signature and legitimacy conditions) generated by the attack detecting unit 13 to an adjacent repeater device (step S4).

### [Processes Performed When a Signature is Received]

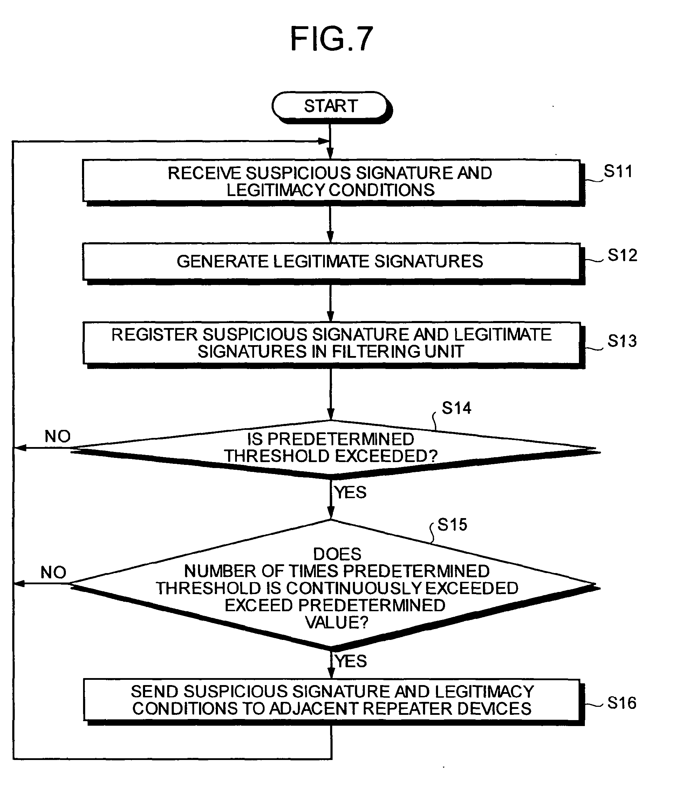

The operation process performed when a signature is received by the repeater device 10 will now be described with reference to Fig. 7. Fig. 7 is a flowchart of the processing procedure performed when a signature is received.

As shown in the figure, when the signature communicating unit 14 of the repeater device 10 receives a signature, etc., (in the first embodiment, a suspicious signature and legitimacy conditions) that are sent from an adjacent repeater device (step S11), and the attack detecting unit 13 generates legitimate signatures based on the legitimacy conditions received by the signature communicating unit 14 (step S12).

The attack detecting unit 13 registers the suspicious signature received from the adjacent repeater device and the generated legitimate signatures in the signature list 16a of the filtering unit 16 (step S13). The packet number determining unit 15a acquires packets that satisfy a condition of the suspicious signature registered in the signature list 16a for each unit time from the statistical information provided by the packet acquiring unit 12, and determines whether a number of the acquired packets exceeds a predetermined threshold (step S14).

When the number exceeds the predetermined threshold (Yes at step S14), the continuous exceeding number determining unit 15b determines whether a number of times the predetermined threshold is continuously exceeded exceeds a predetermined value (step S15). When the number of times the predetermined threshold is continuously exceeded exceeds the predetermined value as a result of the determination (Yes at step S15), the signature communicating unit 14 sends the suspicious signature and the legitimacy conditions received to an adjacent repeater device (step S16). In other words, the signature communicating unit 14 selects an adjacent repeater device other than the adjacent repeater device from which the signature is received, and sends the signature to the selected adjacent repeater.

When the number of packets does not exceed the predetermined threshold at step S14 (No at step S14), or when the number of times the predetermined threshold is continuously exceeded does not exceed the predetermined value at step S15 (No at step S15), the processing of sending the signature received from an adjacent repeater device to another repeater device (the processing at step S16) is not performed.

### [Processes Performed When an Illegitimate Packet is Detected]

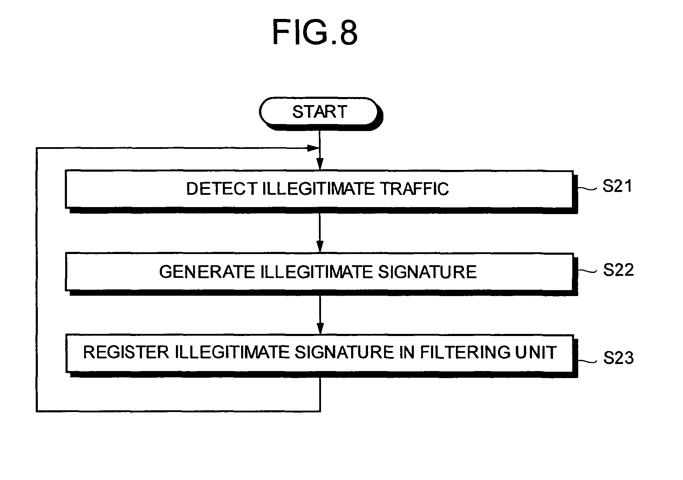

The operation process performed when an illegitimate packet is detected by the repeater device 10 will now be described with reference to Fig. 8. Fig. 8 is a flowchart of the processing procedure performed when an illegitimate packet is detected.

As shown in the figure, when the attack detecting unit 13 of the repeater device 10 detects an illegitimate traffic based on the illegitimate traffic detection condition table 13b shown in Fig. 4 (step S21), the attack detecting unit 13 generates an illegitimate signature (step S22). The attack detecting unit 13 registers the generated illegitimate signature in the signature list 16a in the filtering unit 16 (step S23).

### [Processes Performed When Controlling Packets]

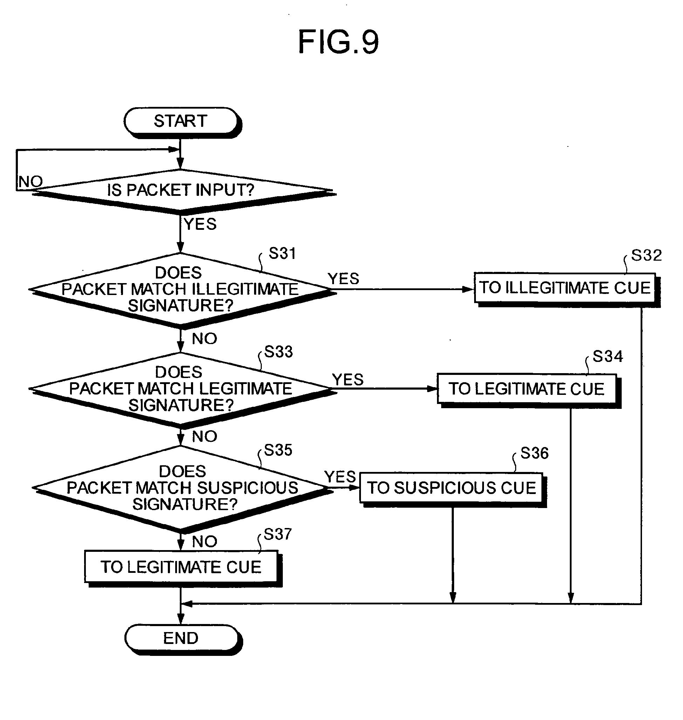

The operation process performed when packets are controlled by the repeater device 10 will now be described with reference to Fig. 9. Fig. 9 is a flowchart of the processing procedure performed when packets are controlled.

As shown in the figure, when a packet is input from the network interfacing unit 11, the filtering unit 16 determines whether the packet matches the illegitimate signature registered in the signature list 16a (step S31). When the packet matches the illegitimate signature (Yes at step S31), the filtering unit 16 inputs the packet into an illegitimate cue for processing illegitimate packets (step S32).

On the other hand, when the packet does not match the illegitimate signature (No at step S31), the filtering unit 16 determines whether the input packet matches the legitimate signature registered in the signature list 16a (step S33). When the packet matches the legitimate signature (Yes at step S33), the filtering unit 16 inputs the packet into a legitimate cue for legitimate users (step S34).

When the packet does not match the legitimate signature (No at step S33), the filtering unit 16 determines whether the input packet matches the suspicious signature registered in the signature list 16a (step S35). When the packet matches the suspicious signature (Yes at step S35), the filtering unit 16 inputs the packet into a suspect cue for suspect users (step S36). On the other hand, when the packet does not match the suspicious signature (No at step S35), the filtering unit 16 inputs the packet into the legitimacy cue (step S37).

Regarding the packets in each cue, the filtering unit 16 outputs packets in the legitimate cue from the network interfacing unit 11 without restricting the transmission band, and restrictingly outputs packets in the suspect cue and the illegitimate cue in accordance with transmission band restriction values indicated by the respective signatures. Plural illegitimate signatures, legitimate signatures, and suspicious signatures can be registered in the signature list 16a. When detection attributes, etc., of a registered signature satisfies a predetermined determination criteria, the filtering unit 16 cancels the signature that satisfies the predetermined determination criteria, and stops the process of controlling the passage of packets according to the cancelled signature.

### [Effects of the First Embodiment]

According to the first embodiment, the repeater device 10 monitors packets that satisfy a condition of a signature received from an adjacent repeater device to determine whether there is an attack, and sends the signature to another adjacent repeater only when it is determined that there is an attack. Therefore, a suspicious signature is prevented from being sent to all repeater devices 10 arranged in a network. Thus, a processing load on the repeater devices 10 arranged in the network is reduced, and a packet restriction processing is efficiently performed.

According to the first embodiment, the repeater device 10 determines that there is an attack when a number of packets satisfying a condition of a signature received from an adjacent repeater device within a unit time exceeds a predetermined threshold. Therefore, the repeater device 10 can objectively and reliably determine whether there is an attack. More specifically, the repeater device 10 does not immediately determine that there is an attack when a number of packets satisfying a condition of a signature within a unit time exceeds a predetermined threshold, but determines that there is an attack only when the number of times that that the predetermined threshold is continuously exceeded exceeds a predetermined value. Therefore, the repeater device 10 can further reliably determine whether there is an attack.

According to the first embodiment, the repeater device 10 sends a signature to an adjacent repeater device other than the adjacent repeater device from which the signature is received. Therefore, a signature is prevented from being sent to a repeater device 10 that is already performing a packet restriction processing, so that a processing load on the repeater devices 10 arranged in a network is reduced, and a packet restriction processing can be efficiently performed.

### [Other Embodiments]

Though the first embodiment of the present invention was described above, the invention can be implemented in various different ways besides that explained as the first embodiment.

For example, in the first embodiment, it is determined that there is an attack when a number of packets satisfying a condition of a signature within a unit time exceeds a predetermined threshold and a number of times that that the predetermined threshold is continuously exceeded exceeds a predetermined value. However, the present invention is not limited to the first embodiment. It can immediately be determined that there is an attack when a number of packets satisfying a condition of a signature within a unit time exceeds a predetermined threshold. In other words, the method of determining whether there is an attack described in the first embodiment is just one example to which the present invention is not limited. The present invention can be similarly applied to other methods of determining whether there is an attack.

The constituent elements of the devices illustrated in the first embodiment (for example, the repeater device 10 shown in Fig. 1) are merely conceptual and do not necessarily physically resemble the structures shown in the drawings. For instance, the repeater device 10 need not necessarily have the structure that is illustrated. The repeater device 10 as a whole or in parts can be broken down or integrated either functionally or physically in accordance with the load or how the repeater device 10 is to be used. The process functions performed by the repeater device 10 are entirely or partially realized by a CPU or a program executed by the CPU or by a hardware using wired logic.

All the automatic processes explained in the first embodiment can be, entirely or in part, carried out manually. Similarly, all the manual processes explained in the first embodiment can be entirely or in part carried out automatically by a known method. The sequence of processes, the sequence of controls, specific names, and data including various parameters (for example, contents of the suspicious attack detection condition table, the illegitimate traffic detection condition table, and the legitimacy condition table) can be changed as required unless otherwise specified.

In the first embodiment, functions of the devices realizing the present invention (for example, the repeater device 10) are described. The functions of the devices can be implemented by causing a personal computer or a work station to execute computer programs. In other words, the processing procedures described in the first embodiment can be implemented by executing predetermined computer programs. The computer programs can be provided or distributed through a network such as the Internet. Moreover, the computer programs can be stored in a computer-readable recording medium such as a hard disk, a flexible disk (FD), a compact disc read only memory (CD-ROM), a magneto-optic disc (MO), a digital versatile disk (DVD), and so forth, and can be executed by causing a computer to read a computer program from a recording medium. For example, a CD-ROM storing the computer program of the repeater device as described in the first embodiment can be distributed, and a computer can read and execute the computer program stored in the CD-ROM.

### [Second Embodiment]

The second embodiment describes a case of restricting a transfer processing of a signature using generation identification information of the signature. In the following, principle terms, problems of the conventional technology, outline and characteristics of the network attack protection system, arrangement and processes of the repeater device, and effects of the second embodiment are described in this order, and variations of the second embodiment are described last.

### [Description of Terms]

First, the principle terms used in the description of the second embodiment will be described. A "suspicious signature," used in the second embodiment, is a signature for restricting a packet suspected of being an attack packet (suspicious attacking packet) and is specifically arranged by defining attributes (such as a destination IP address, protocol, destination port No., etc.) that indicate characteristics of the suspicious attacking packet, the passage of which is to be restricted, and restriction details (such as restriction information for restricting the band when a specific packet flows in).

A "legitimate signature," used in the second embodiment is a signature for enabling the passage of a legitimate packet (a legitimate packet that is a communication packet of a legitimate user), among packets corresponding to a suspicious signature, that is deemed not to be an attack packet, and is specifically arranged by defining attributes (such as the source IP address, service type, destination IP address, protocol, destination port No., etc.) that indicate characteristics of the legitimate packet, the passage of which is to be enabled.

An "illegitimate signature," used in the second embodiment is a signature for restricting an illegitimate packet included among illegitimate traffic (a packet that meets illegitimate traffic conditions), and is specifically arranged by defining the source IP address, etc., of the illegitimate packet.

"Identification information (corresponding to "generation identification information" in the claims)" used in the second embodiment is information for uniquely identifying each signature generated. Specifically, the identification information includes an identifier that uniquely identifies each repeater device that generates a signature (for example, an identifier including an engine type, an engine ID, and a node ID) and an identifier that uniquely identifies each suspicious signature among the plurality of suspicious signatures generated by the repeater devices (for example, a generation number given to a sequential).

A "downstream node (corresponding to "relay source information" in the claims)" in the second embodiment is information used by a repeater device when receiving the signature from an adjacent repeater device and sending it to another adjacent repeater device. The downstream node specifies the adjacent repeater device, which is immediately downstream, from which the signature is received (in other words, the adjacent repeater device from which the signature is directly received). Specifically, the downstream node defines the address of the adjacent repeater device.

An "upstream node (corresponding to "relay destination information" in the claims)" in the second embodiment is information used by a repeater device when receiving the signature from an adjacent repeater device and sending it to another adjacent repeater device. The upstream node specifies the adjacent repeater device, which is immediately upstream, to which the signature is sent (in other words, the adjacent repeater device to which the signature is directly sent). Specifically, the upstream node defines the address of the adjacent repeater device. There is always one relay source of a signature (downstream node), but there can be a plurality of relay destinations (upstream node).

### [Problems of the Conventional Technology]

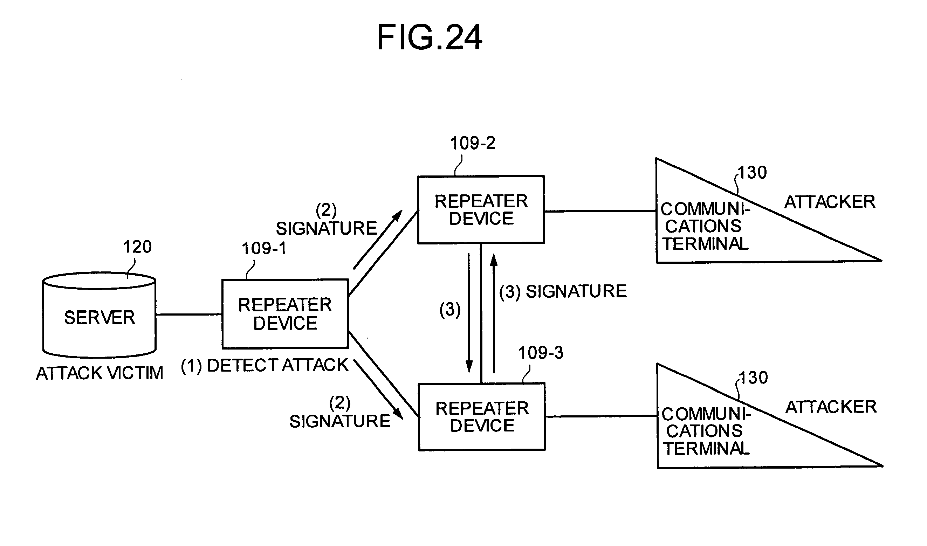

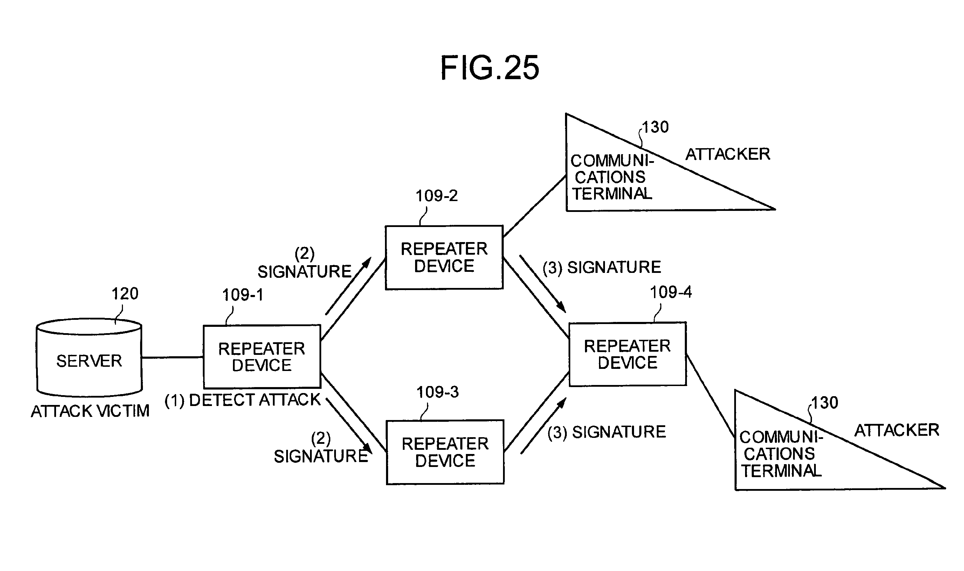

In the conventional technology, signatures are sent to adjacent repeater devices. Therefore, according to adjacency relationships between repeater devices in the network attack protection system, a repeater device might receive the same signature from different adjacent repeater devices. If the repeater device performs a processing based on overlapping signatures, the repeater device cannot efficiently perform a packet restriction processing based on the signatures. This problem is described in detail with reference to Figs. 24 and 25. Figs. 24 and 25 are schematics for explaining a network attack protection system according to the conventional technology.

As shown in Fig. 24, when a repeater device 109-1 detects that two communications terminals 130 are performing DDos attacks on a server 120 in a network (refer to (1) in Fig. 24), the repeater device 109-1 sends a signature to adjacent repeater devices, a repeater device 109-2 and a repeater device 109-3 (refer to (2) in Fig. 24). When the repeater device 109-2 receives the signature from the repeater device 109-1, which is an adjacent repeater device, the repeater device 109-2 processes packets based on the signature received, and sends the signature to the repeater device 109-3, which is an adjacent repeater device. Similarly, when the repeater device 109-3 receives the signature from the repeater device 109-1, which is an adjacent repeater device, the repeater device 109-3 processes packets based on the signature received, and sends the signature to the repeater device 109-2, which is an adjacent repeater device (refer to (3) in Fig. 24). Incidentally, in the example shown in Fig. 24, the repeater device 109 does not send a signature received from an adjacent repeater device to the adjacent repeater device from which the signature is received.

If signatures are sent as described in the example shown in Fig. 24, the repeater device 109-3 receives the same signature from the repeater device 109-1 and the repeater device 109-2. Similarly, the repeater device 109-2 receives the same signature from the repeater device 109-1 and the repeater device 109-3. As a result, the repeater device 109-2 and the repeater device 109-3 perform packet control processings based on overlapping signatures, and therefore, processings for restricting packets based on a signature cannot be efficiently performed.

Moreover, as shown in Fig. 25, when a repeater device 109-1 detects that two communications terminals 130 are performing DDos attacks on a server 120 in a network (refer to (1) in Fig. 25), the repeater device 109-1 sends a signature to adjacent repeater devices, a repeater device 109-2 and a repeater device 109-3 (refer to (2) in Fig. 25). When the repeater device 109-2 and the repeater device 109-3 receive the signature from the repeater device 109-1, which is an adjacent repeater device, the repeater device 109-2 and the repeater device 109-3 process packets based on the signature received, and send the signature to the repeater device 109-4, which is a repeater device adjacent to both the repeater device 109-2 and the repeater device 109-3(refer to (3) in Fig. 25).

If signatures are sent as described in the example shown in Fig. 25, the repeater device 109-4 receives the same signature from the repeater device 109-2 and the repeater device 109-3, which are adjacent repeater devices. As a result, the repeater device 109-2 and the repeater device 109-3 performs a packet control processing based on overlapping signatures, and therefore, processings for restricting packets based on a signature cannot be efficiently performed.

Thus, the second embodiment has been made to resolve the above issue of the conventional art and an object thereof is to provide a repeater device, a relaying method, a relaying program, and a network attack protection system that can avoid redundantly registering or redundantly sending the same signature.

### [Outline and Characteristics of the System]

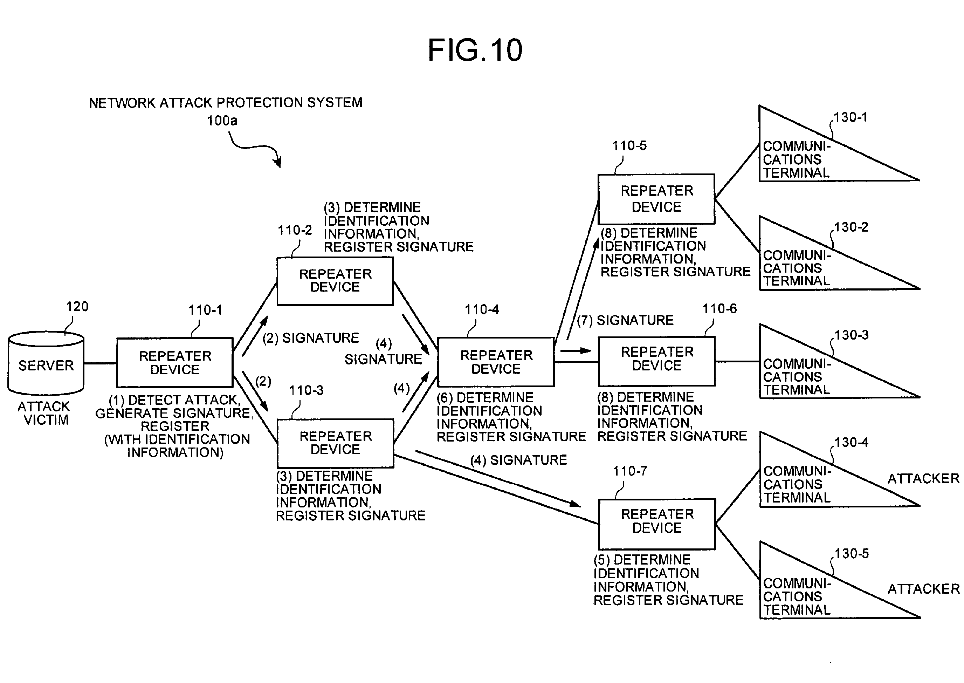

An outline and characteristics of a network attack protection system of the second embodiment will now be described using Fig. 10. Fig. 10 is a schematic for explaining the network attack protection system of the second embodiment.

The network attack protection system 100a includes a plurality of repeater devices 110 arranged in a network. Servers 120, which are computers subject to DoS attacks and DDoS attacks, and communications terminals 130, which are computers that can carry out the DoS attacks and DDoS attacks, are connected to the network. In the following description, the repeater devices 110 will be referred to as repeater devices 110-1 to 110-7 when the repeater devices 110 are to be distinguished respectively, the servers 120 will be referred to as servers 120-1 and 120-2 when the servers 120 are to be distinguished respectively, and the communications terminals 130 will be referred to as communications terminals 130-1 to 130-5 when the communications terminals 130 are to be distinguished respectively.

An essential function of the repeater device 110 is described first. Upon detecting that at least one communications terminal 130 among the communications terminals 130 is carrying out a DoS attack or a DDoS attack on a server 120 on the network, a repeater device 110 generates signatures (suspicious signature and illegitimate signature) for restricting the passage of packets and legitimate signatures for enabling the passage of packets. The repeater device 110 then registers the signatures (suspicious signature, illegitimate signature, and legitimate signature) that it has generated on its own in a signature list.

The repeater device 110 sends the generated suspicious signature (and legitimacy conditions used for generating the legitimate signature) to an adjacent repeater device. The repeater device 110 does not only send the suspicious signature, etc., to an adjacent repeater device immediately upon generating it, but also sends the suspicious signature once again, according to need, such as when a sending error occurs, or when contents of the suspicious signature are updated.

Meanwhile, when a suspicious signature, etc., is received from an adjacent repeater device, the repeater device 110 generates a legitimate signature essentially based on the legitimacy conditions, registers the received suspicious signature and the generated legitimate signature in the signature list, and sends the received suspicious signature and the legitimate signature to another adjacent repeater device. To cite examples of adjacent repeater devices, in Fig. 10, the adjacent repeater devices of the repeater device 110-3 are the repeater device 110-1, the repeater device 110-2, the repeater device 110-4, and the repeater device 110-7, and the repeater device 110-5 and the repeater device 110-6 are not in an adjacency relationship with the repeater device 10-3. The adjacency relationship does not signify physical adjacency.

Thus, in the network attack protection system 100a shown in Fig 10, each repeater device 110 repeatedly sends a signature received, so that all repeater devices 110 arranged in the network register the same suspicious signature and legitimate signature in the signature list. Each of the repeater devices 110 controls passage of packets based on the signatures registered in the signature list. In other words, each repeater device 110 passes a packet corresponding to an illegitimate signature or a suspicious signature upon restricting a transmission band thereof, or disposes them. On the other hand, each repeater device 110 enables passage of a packet corresponding to a legitimate signature or a packet that does not correspond to any signature without restricting the transmission band.

In addition to the above described essential function, the repeater device 110 according to the second embodiment determines whether a signature received from an adjacent repeater device is already registered in the signature list, and only when the signature is not yet registered, the repeater device 110 registers the signature in the signature list and sends the signature to an adjacent repeater device. Thus, the repeater device 110 avoids redundantly registering or redundantly sending the same signature received from an adjacent repeater device, so that packets can be efficiently controlled based on the signature.

The main feature of the repeater device 110 for realizing the above main feature is described as follows. When the repeater device 110 detects a suspicious attack, the repeater device 110 generates a suspicious signature for restricting a suspicious attacking packet, and identification information for uniquely identifying each suspicious signature generated. Furthermore, the repeater device 110 registers the suspicious signature in correspondence with the identification information in the signature list, and sends the generated suspicious signature (and legitimacy conditions) and the identification information to an adjacent repeater device. Furthermore, according a relay processing of the suspicious signature and the identification information, an upstream node for specifying an adjacent repeater device that is a relay destination is registered in the signature list in correspondence with the suspicious signature and the identification information. When it is required to send the suspicious signature once again, the signature list is referenced, and a signature given the same identification information is sent once again to the same adjacent repeater device that is the relay destination.

Meanwhile, when the suspicious signature and the identification information are received, the repeater device 110 determines whether they are already registered in the signature list therein. When the suspicious signature and the identification information are not registered, the repeater device 110 registers them in the signature list, and sends them to an adjacent repeater device. Furthermore, according a relay processing of the suspicious signature and the identification information, a downstream node for specifying an adjacent repeater device that is a relay source and an upstream node for specifying an adjacent repeater device that is a relay destination are registered in the signature list in correspondence with the suspicious signature and the identification information.

Contrarily, when the suspicious signature and the identification information received are already registered in the signature list, the repeater device 110 that received the suspicious signature, etc., further determines whether a downstream node registered in correspondence with the identification information is the same as a downstream node of the signature actually received. When the downstream nodes are the same, the repeater device 110 determines that the signature has been sent again, and registers the received suspicious signature over the registered signature, and sends again the received suspicious signature to another adjacent repeater device indicated by an upstream node registered in the signature list.

On the other hand, when it is determined that the downstream nodes are different, the repeater device 110 that received the suspicious signature, etc. determines that the signature has not been sent again, and does not register the received suspicious signature in the signature list (or register over a registered signature), or send (or send again) the received suspicious signature to another adjacent repeater device. The repeater device 110 returns an already registered notification indicating that the signature is already registered to the adjacent repeater device corresponding to the downstream node of the received signature. The repeater device 110 that receives the already registered notification from an adjacent repeater device deletes information (address) corresponding to the adjacent repeater device from the upstream node stored in the signature list.

A specific example that realizes the main feature is described with reference to Fig. 10. As shown in Fig. 10, for example, when the communications terminal 130-4 and the communications terminal 130-5 are performing DoS attacks on the server 120-1, and the repeater device 110-1 detects a suspicious attack, the repeater device 110-1 generates a suspicious signature for restricting a suspicious attacking packet and identification information, registers the suspicious signature in correspondence with the identification information in the signature list, and sends the generated suspicious signature (and legitimacy conditions) and the identification information to an adjacent repeater device, which are the repeater device 110-2 and the repeater device 110-3. Furthermore, according a relay processing of the suspicious signature and the identification information, addresses of the repeater device 110-2 and the repeater device 110-3 are registered in the signature as upstream nodes (refer to (1) and (2) in Fig. 10).

Meanwhile, when the suspicious signature and the identification information are received from the repeater device 110-1, the repeater device 110-2 and the repeater device 110-3 determines whether the suspicious signature and the identification information received are already registered in the signature list therein. In this case, the identification information is not yet registered, so the suspicious signature and the identification information received is registered in the signature list, and the suspicious signature and the identification information is sent to another adjacent repeater device. In other words, the repeater device 110-2 sends the suspicious signature and the identification information to the repeater device 110-4, and the repeater device 110-3 sends the suspicious signature and the identification information to the repeater device 110-4 and the repeater device 110-7 (refer to (3) and (4) in Fig. 10).

Furthermore, according a relay processing of the suspicious signature and the identification information, the repeater device 110-2 and the repeater device 110-3 register upstream nodes and downstream nodes in their signature lists. In other words, the repeater device 110-2 registers the address of the repeater device 110-1 as a downstream node, and the address of the repeater device 110-4 as an upstream node in the signature list. The repeater device 110-3 registers the address of the repeater device 110-1 as a downstream node, and the addresses of the repeater device 110-4 and the repeater device 110-4 as upstream nodes in the signature list.

When the repeater device 110-7 receives the suspicious signature and the identification information from the repeater device 110-3, the suspicious signature and the identification information received is not yet registered in signature list therein, so the repeater device 110-7 registers the suspicious signature and the identification information in the signature list in a similar manner as the repeater device 110-2 and the repeater device 110-3. However, because there is no adjacent repeater device, the repeater device 110-7 does not send the suspicious signature or the identification information to an adjacent repeater device. Moreover, the repeater device 110-7 does not register an upstream node, but registers the address of the repeater device 110-3 as a downstream node in the signature list (refer to (5) in Fig. 10).

Meanwhile, when the repeater device 110-4 receives the suspicious signature and the identification information from, for example, the repeater device 110-2 before receiving them from the repeater device 110-3, the identification information of the received suspicious signature is not yet registered in the signature list therein. Therefore, similarly to the repeater device 110-2 and the repeater device 110-3, the repeater device 110-4 registers the suspicious signature and the identification information received in the signature list therein, and sends the suspicious signature and the identification information to other adjacent repeater devices, which are the repeater device 110-3, repeater device 110-5, and repeater device 110-6. Furthermore, the repeater device 110-4 registers the address of the repeater device 110-2 as a downstream node in the signature list, and registers the addresses of the repeater device 110-3, the repeater device 110-5, and the repeater device 110-6 as upstream nodes in the signature list (refer to (6) and (7) in Fig. 10).

When the repeater device 110-5 and the repeater device 110-6 receive the suspicious signature and the identification information from the repeater device 110-4, the suspicious signature and the identification information received is not yet registered in signature list therein, so the repeater device 110-5 and the repeater device 110-6 register the suspicious signature and the identification information in the respective signature lists in a similar manner as the repeater device 110-7. Because there is no adjacent repeater device, the repeater device 110-5 and the repeater device 110-6 do not send the suspicious signature or the identification information to an adjacent repeater device. Moreover, the repeater device 110-5 and the repeater device 110-6 do not register upstream nodes, but register the address of the repeater device 110-4 as a downstream node in the respective signature lists (refer to (8) in Fig. 10).

In the above example, after receiving the suspicious signature and the identification information from the repeater device 110-2, when the repeater device 110-4 receives the same suspicious signature and the identification information from the repeater device 110-3 as those received from the repeater device 110-2, the suspicious signature and the identification information received are already registered in the signature list therein, and the downstream node (repeater device 110-2) registered in correspondence with the identification information is different from a downstream node (repeater device 110-3) of the signature that is actually received. Therefore, the repeater device 110-4 does not register the received suspicious signature in the signature list (or register over a registered signature), or send (or send again) the received suspicious signature to another adjacent repeater device. The repeater device 110-4 returns an already registered notification indicating that the signature is already registered to the repeater device 110-2 corresponding to the downstream node of the received signature. The repeater device 110-3 that receives the already registered notification from the repeater device 110-4 deletes the address corresponding to the repeater device 110-4 from an upstream node stored in the signature list therein.

In the above example, when the repeater device 110-3 receives the same suspicious signature and the identification information from the repeater device 110-4, the suspicious signature and the identification information received are already registered in the signature list therein, and the downstream node (repeater device 110-1) registered in correspondence with the identification information is different from that of the downstream node (repeater device 110-4) that is actually received. Therefore, the repeater device 110-3 does not register the received suspicious signature in the signature list (or register over a registered signature), or send (or send again) the received suspicious signature to another adjacent repeater device. The repeater device 110-3 returns an already registered notification indicating that the signature is already registered to the repeater device 110-4 corresponding to the downstream node of the received signature. The repeater device 110-4 that receives the already registered notification from the repeater device 110-3 deletes the address corresponding to the repeater device 110-3 from the upstream node (the addresses of the repeater device 110-3, the repeater device 110-5, and the repeater device 110-6) stored in the signature list.

In the above example, after receiving the suspicious signature and the identification information from the repeater device 110-2, when the repeater device 110-4 receives again the same suspicious signature corresponding to the same identification information from the repeater device 110-2 as those already received from the repeater device 110-2, the identification information of the received suspicious signature is already registered in the signature list therein. Because the downstream node (repeater device 110-2) registered in correspondence with the identification information is the same as the downstream node (repeater device 110-2) of the signature actually received, the repeater device 110-4 determines that the signature has been sent again. Accordingly, the repeater device 110-4 registers the received suspicious signature over the signature registered in the signature list, and sends again the suspicious signature to the repeater device 110-5 and the repeater device 110-6 indicated by the upstream node (the addresses of the repeater device 110-5 and the repeater device 110-6) registered in the signature list.

As described above, in the network attack protection system shown in Fig. 10, the repeater device determines whether a signature received from an adjacent repeater device is already registered in the signature list. Only when the signature is not yet registered, the repeater device registers the signature in the signature list and sends the signature to another adjacent repeater device. Accordingly, in the above example, the repeater device 110-4 and the repeater device 110-3 can avoid redundantly registering or redundantly sending the same signature, and efficiently perform processings for restricting packets based on a signature.

The repeater device 110 is a device that relays packets while protecting against attacks and may function, for example, as a router or a bridge. The repeater device 110 may be connected to a management network for managing the repeater device 110, etc., and the signatures may be sent and received via the management network. The signature sent by the repeater device 110 is not limited to the suspicious signature; the repeater device 110 can send another signature instead of the suspicious signature, or another signature in addition to the suspicious signature.

### [Arrangement of the Repeater device]

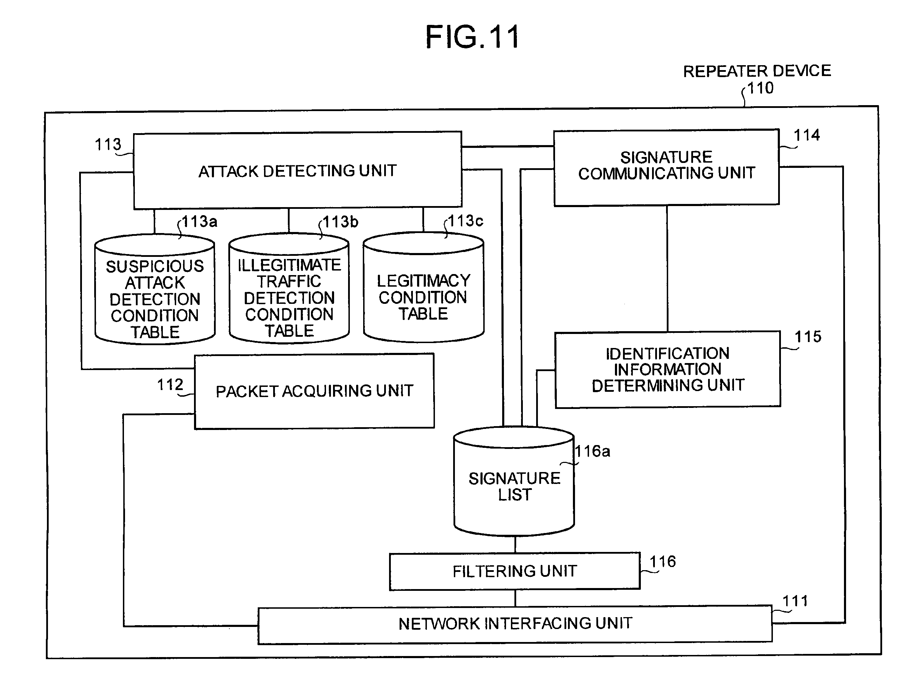

The arrangement of the repeater device 110 shown in Fig. 10 will now be described using Fig. 11. Fig. 11 is a detailed block diagram of the repeater device 110. The repeater device 110 includes a network interfacing unit 111, a packet acquiring unit 112, an attack detecting unit 113 (and an suspicious attack detection condition table 113a, an illegitimate traffic detection condition table 113b, and a legitimacy condition table 113c), a signature communicating unit 114, an identification information determining unit 115, and a filtering unit 116 (and a signature list 116a).

The repeater device 110 may have a CPU (Central Processing Unit), a memory, a hard disk, etc., and the packet acquiring unit 112, the attack detecting unit 113, the signature communicating unit 114, the identification information determining unit 115, and the filtering unit 116 may be program modules that are processed by the CPU. These program modules may be processed by a single CPU or may be processed dispersedly by a plurality of CPUs. Linux or other general-purpose OS may be installed in the repeater device 110, and a packet filter provided in the general-purpose OS may be made to function as the filtering unit 116.

The attack detecting unit 113 corresponds to being the "signature generating unit" indicated in the claims, the signature communicating unit 114 corresponds to being the "signature communicating unit," the identification information determining unit 115 corresponds to being the "signature registration determining unit," and the signature list 116a corresponds to being the "signature storage unit" indicated in the claims.

In Fig. 11, the network interfacing unit 111 is a unit that sends and receives packets to and from communication equipment connected to the network and is specifically arranged from a network connection card, etc., that is connected to the network, which may be a LAN (Local Area Network), a WAN (Wide Area Network), etc. Though not illustrated in Fig. 11, the repeater device 110 may also be arranged with a monitor (or a display or a touch panel), speakers, and other output units that output various information.

The packet acquiring unit 112 is a processing unit that acquires the packet received by the network interfacing unit 111 and presents statistical information concerning the statistics of the acquired packet to the attack detecting unit 113 and the packet number determining unit 115a.

The attack detecting unit 113 is a processing unit that performs attack detection and attack analysis based on the statistical information provided by the packet acquiring unit 112 and is connected to the suspicious attack detection condition table 113a, the illegitimate traffic detection condition table 113b, and the legitimacy condition table 113c as shown in Fig. 11. The information stored in the respective tables 113a to 113c will now be described and thereafter the details of the processing by the attack detecting unit 113 will be described.

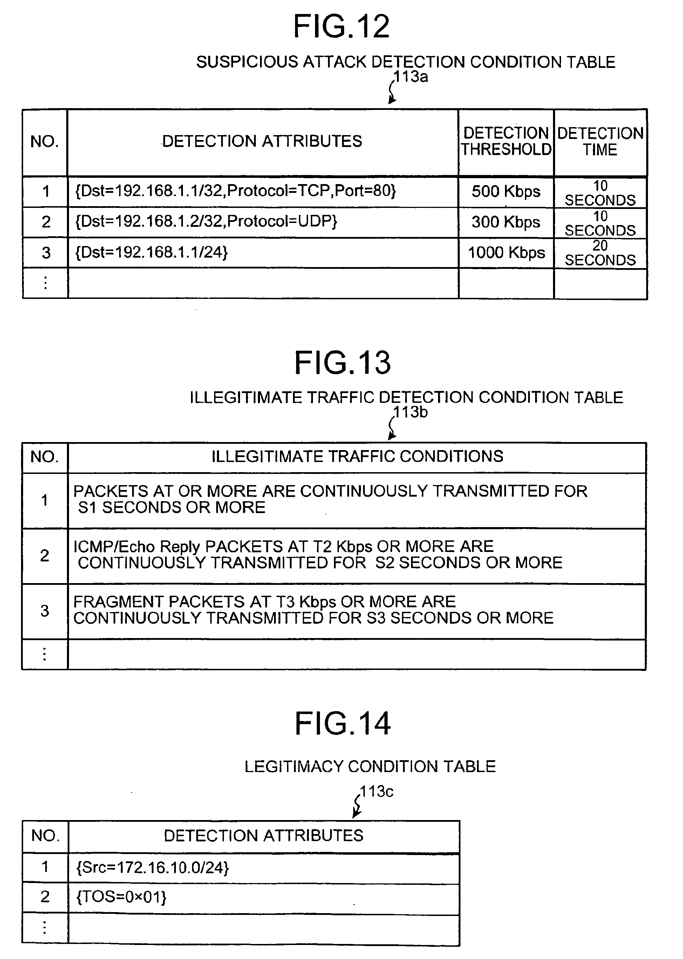

Fig. 12 is a diagram of an example of the information stored in the suspicious attack detection condition table 113a, that is to be more detailed, the "suspicious attack detection conditions" that are used to detect suspicious attacking packets that are received packets that have the possibility of being attack packets. As shown in the figure, the suspicious attack detection conditions are arranged as records of a plurality of sets (three sets in the present example) of combinations of detection attributes, a detection threshold value, and a detection interval, and when a traffic matches the conditions of any record among the respective suspicious attack detection condition records, the communication packet of that traffic is recognized to be a suspicious attacking packet. "No." is used as a matter of convenience for specifying a record.

The attributes of an IP header portion included in an IP packet or the attributes of a TCP header portion or a UDP header portion included in a payload portion of an IP packet are, for example, designated as the "detection attributes" of the suspicious attack detection conditions. Specifically in Fig. 12, the detection attributes of the record of No. 1 are designated by the combination of attribute values in which "Destination IP address" is "192.168.1.1/32" (dst=192.168.1.1/32), "Protocol," which indicates an upper layer (TCP or UDP) protocol type of the IP, is "TCP" (Protocol=TCP), and "Destination Port," which indicates which application the upper layer protocol of the IP is an information of, is "80" (Port=80).

The detection attributes of the record of No. 2 are designated by the combination of attributes values of a "Destination IP address" of "192.168.1.2/32" (dst=192.168.1.2/32) and a "Protocol" of "UDP" (User Datagram Protocol) (Protocol=UDP). Likewise, the detection attribute of the record of No. 3 is designated by the attribute of a "Destination IP Address" of "192.168.1.0/24."

The suspicious attack detection condition of the "detection threshold value" designates the minimum transmission band for detecting the traffic of a received packet with the detection attributes designated by the same record as an attack suspect traffic, and the suspicious attack detection condition of the "detection interval" likewise designates the minimum continuous duration. Though not shown in Fig. 12, a set of attributes values, in which the "Destination IP Address" is unconditional ("any") and the "Protocol," which indicates the upper layer protocol type of the IP, is "ICMP (Internet Control Message Protocol)," may be designated as the detection attributes.

Fig. 13 is a diagram of an example of information stored in the illegitimate traffic detection condition table 113b, that is to be more detailed, the "illegitimate traffic conditions" that are used for detecting illegitimate traffic from the traffic of a suspicious attacking packet. As shown in the figure, the illegitimate traffic conditions are arranged from a plurality of known traffic patterns of DDoS attacks, and when the traffic of a suspicious attacking packet matches any of the traffic patterns, the traffic is recognized to be an illegitimate traffic. "No." is used as a matter of convenience for specifying a record (pattern).

Specifically, the illegitimate traffic conditions of No. 1 indicate a traffic pattern, in which "a packet of a transmission band of no less than T1 Kbps is being sent continuously for no less than S1 seconds." The illegitimate traffic conditions of No. 2 indicate a traffic pattern, in which "an ICMP (Internet Control Message Protocol) echo reply message packet of a transmission band of no less than T2 Kbps is being sent continuously for no less than S2 seconds." The illegitimate traffic conditions of No. 3 indicate a traffic pattern, in which "a fragment packet of a transmission band of no less than T3 Kbps that indicates that the data included in the packet are sent upon being partitioned among a plurality of IP packets due to the data being too long is being sent continuously for no less than S3 seconds."

Fig. 14 is a diagram of an example of information stored in the legitimacy condition table 113c, that is to be more detailed, the "legitimacy conditions" that express packets sent from a communications terminal 130 used by a legitimate user. As shown in the figure, the legitimacy conditions are arranged from records, each of which is a combination of attributes of IP packets and the attribute values. "No." is used as a matter of convenience for specifying a record (pattern).

Specifically, the detection attribute of the record of No. 1 designates that the "Source IP Address" of the IP is "172.16.10.0/24" (src=172.16.10.0/24), and the detection attribute of the record of No. 2 designates that "Type of Service," which indicates the service quality on the IP, is "01 (in hexadecimal notation)" (TOS=Ox01). As such legitimacy conditions, for example, the source IP addresses of servers 120 of branches of a firm of a server owner and related firms that are to be protected and the source IP addresses of a network, which the owner of a LAN that includes servers 120 recognizes as being that of a legitimate user, are set.

Returning now to Fig. 11, when an attack is detected based on the statistical information provided by the packet acquiring unit 112, the attack detecting unit 113 generates a suspicious signature for restricting the communication packet (suspicious attacking packet) of the attack suspect traffic. Specifically, in accordance with the suspicious attack detection conditions shown in Fig. 12, the attack detecting unit 113 checks for traffic that continues for a longer duration than that designated by the detection interval, uses a transmission band that is no less than that designated by the detection threshold value, and matches the detection attributes, and when a traffic is found to match any of the records, the traffic is detected as an attack suspect traffic, and the suspicious signature is generated from the detection attributes of the suspicious attack detection condition record that the detected attack suspect traffic matches.

Also, when an attack is detected, the attack detecting unit 113 generates legitimate signatures along with the suspicious signature. Specifically, the legitimacy conditions shown in Fig. 14 are referenced, and the legitimate signatures are generated by subjecting each of the legitimacy condition records to an AND operation with the suspicious signature. These legitimate signatures are used to release legitimate packets, which are communication packets of legitimate users, from the restriction by the suspicious signature, and with the example of Figs. 12 and 14, the suspicious signature of a packet detected by the conditions of the record of No. 1 in Fig. 12 is "dst=192.168.1.1/32, Protocol=TCP, Port=80," and in Fig. 14, the legitimate signatures are "src=172.16.10.24, dst=192.168.1.1/32, Protocol=TCP, Port=80," and "TOS=0x01, dst=192.168.1.1/32, Protocol=TCP, Port=80."

Furthermore, when a traffic matching any of the patterns among the illegitimate traffic conditions shown in Fig. 13 is detected, the attack detecting unit 113 generates an illegitimate signature for restricting illegitimate traffic. Specifically, the source IP address of a packet that meets the detected illegitimate traffic conditions is specified as an illegitimate address range, and the conditions of being in the illegitimate address range and matching the suspicious signature are generated in the form of the illegitimate signature.

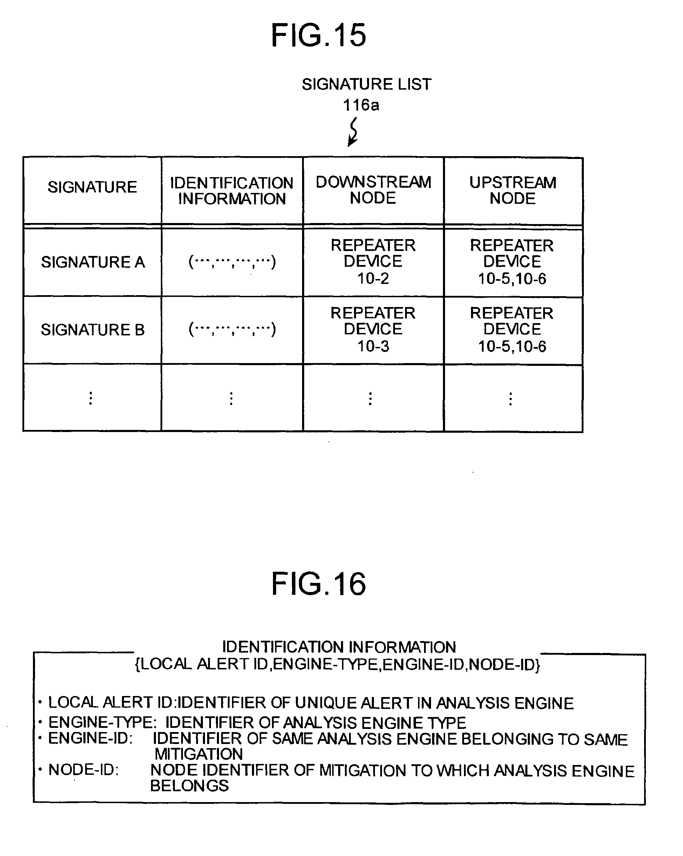

The suspicious signature, the legitimate signature, and the illegitimate signature generated by the attack detecting unit 113 are registered in the signature list 116a (see Fig. 15). The attack detecting unit 113 generates identification information for uniquely identifying each signature generated, and registers the signatures together with the identification information in the signature list 116a.

The identification information given to the signature is described with reference to Fig. 16. Fig. 16 is a schematic for explaining an example of the identification information given to the signature. As shown in the figure, the attack detecting unit 113 generates identification information including an identifier that uniquely identifies each repeater device 110 that generates a signature (i.e., an identifier including an engine type, an engine ID, and a node ID) and an identifier that uniquely identifies each suspicious signature among the plurality of suspicious signatures generated by the repeater devices (for example, a generation number given to a sequential).

In Fig. 11, the signature communicating unit 114 is a processing unit that sends the signatures, etc., generated by the attack detecting unit 113 to an adjacent repeater device, receives a signature sent from an adjacent repeater device, registers the signature received from the adjacent repeater device in the signature list 116a, and sends the signature received from the adjacent repeater device to another adjacent repeater device.

Specifically, when the attack detecting unit 113 registers a signature and identification information in the signature list 116a, the signature communicating unit 114 sends the registered signature, etc., together with the identification information, to an adjacent repeater device. Furthermore, according a relay processing of the signature and the identification information, the signature communicating unit 114 registers in the signature list 116a an upstream node for specifying an adjacent repeater device, which is a relay destination, in correspondence with the signature and the identification information (see Fig. 15). When it is necessary to send again the suspicious signature, etc., the signature communicating unit 114 references the signature list 116a, and sends again a signature that is given the same identification information to the adjacent repeater device, which is the same relay destination.

The signature communicating unit 114 performs the processing of registering a signature received from an adjacent repeater device in the signature list 116a and the processing of sending the signature to another adjacent repeater device. These processings are executed according to a determination result of the identification information determining unit 115 described below.

When the signature communicating unit 114 receives a signature from an adjacent repeater device, the identification information determining unit 115 determines whether identification information of the signature received is already registered in the signature list 116a. When the identification information determining unit 115 determines that it is not yet registered, the signature communicating unit 114 registers the signature and the identification information received in the signature list 116a, and sends the signature and the identification information to an adjacent repeater device. The signature communicating unit 114 also registers in the signature list 116a a downstream node for specifying an adjacent repeater device that is a relay source and an upstream node for specifying an adjacent repeater device that is a relay destination in correspondence with the signature and the identification information (see Fig. 15).

Contrarily, when the identification information of the signature received is already registered in the signature list 116a, the identification information determining unit 115 further determines whether the downstream node registered in correspondence with the identification information is the same as a downstream node of the signature actually received. When the identification information determining unit 115 determines that the downstream nodes are the same, the signature communicating unit 114 determines that the signature has been sent again, and registers the received signature over the registered signature in the signature list 116a, and sends again the received signature to another adjacent repeater device indicated by the upstream node registered in the signature list 116a.

On the other hand, when the identification information determining unit 115 determines that the downstream nodes are different, the signature communicating unit 114 determines that the signature has not been sent again, and does not register the received suspicious signature in the signature list 116a (or register over a registered signature), or send (or send again) the received signature to another adjacent repeater device. The signature communicating unit 114 returns an already registered notification indicating that the signature is already registered to the adjacent repeater device corresponding to the downstream node of the received signature. When the already registered notification is received from an adjacent repeater device, the signature communicating unit 114 deletes information (address) corresponding to the adjacent repeater device from the upstream node stored in the signature list 116a.

In Fig. 11, the filtering unit 116 is a processing unit that receives packets received by the network interfacing unit 111 and controls the passage of the packets (the output of the packets from the network interfacing unit 111) based on the signature list 116a. Specifically, the filtering unit 116 determines whether an input packet corresponds to an "illegitimate signature," a "legitimate signature," or a "suspicious signature" registered in the signature list 116a (or does not correspond to any of the above), and controls the passage of packets based on the corresponding signature.

More specifically, the filtering unit 116 inputs packets corresponding to illegitimate signatures into an illegitimate cue for processing illegitimate packets, inputs packets corresponding to suspicious signatures into a suspect cue for suspect users, and inputs packets corresponding to legitimate signatures or not corresponding to any of the signatures into a legitimate cue for legitimate users. The filtering unit 116 then outputs the packets, which were input into the legitimate cue, from the network interfacing unit 111 without restriction of the transmission band, and restrictingly outputs the packets, which were input in the suspect cue and the illegitimate cue, in accordance with the transmission band restriction values indicated by the respective signatures (the signatures that had been selected as those for which the conditions were met).

When the detection attributes, etc., of a signature registered in the signature list 116a meets predetermined cancellation criteria, the filtering unit 116 cancels the signature that meets the predetermined cancellation criteria and stops the process of controlling the passage of packets based on the cancelled signature.

### [Process Performed When a suspicious attacking packet is Detected]

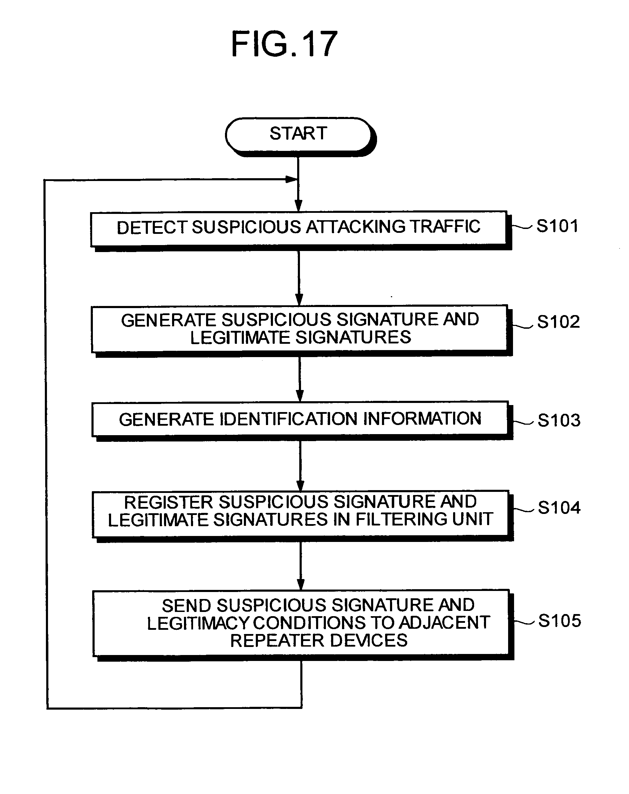

The operation process performed when the repeater device 110 detects a suspicious attacking packet will now be described with reference to Fig. 17. Fig. 17 is a flowchart of the processing procedure performed when a suspicious attacking packet is detected.

As shown in the figure, when the attack detecting unit 113 of the repeater device 110 detects an attack suspect traffic based on the suspicious attack detection condition table 113a shown in Fig. 12 (step S101), the attack detecting unit 113 generates a suspicious signature and legitimate signatures (step S102).

The attack detecting unit 113 generates identification information for uniquely identifying each signature generated (step S103), and registers the suspicious signature and the legitimate signatures with the identification information in the signature list 116a in the filtering unit 116 (step S104). The signature communicating unit 114 sends the signatures, etc. (in the second embodiment, the suspicious signature and the legitimate conditions) and the identification information, which are generated by the attack detecting unit 113, to an adjacent repeater device (step S105).

According a relay processing of the signature, etc., at step S104, the signature communicating unit 114 registers an upstream node for specifying an adjacent repeater device, which is a relay destination, in the signature list 116a. When it is required to send again the suspicious signatures, etc., the signature communicating unit 114 references the signature list 116a and sends again a signature given the same identification information to the same adjacent repeater device that is the relay destination.

### [Processes Performed When a Signature is Received]

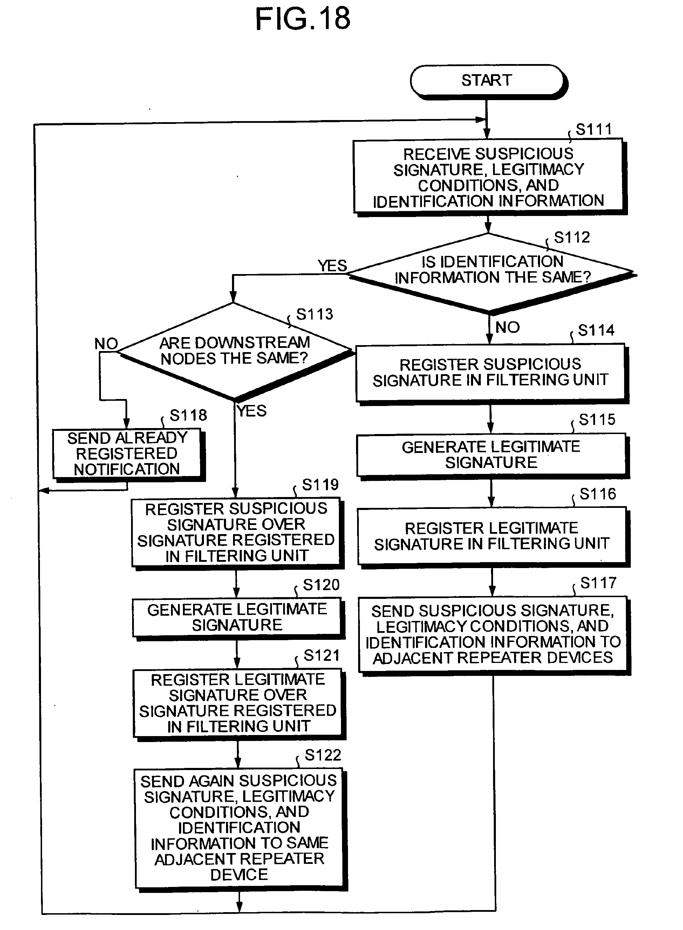

The operation process performed when a signature is received by the repeater device 110 will now be described with reference to Fig. 18. Fig. 18 is a flowchart of the processing procedure performed when a signature is received.

As shown in the figure, when the signature communicating unit 114 of the repeater device 110 receives a signature, etc., (in the second embodiment, a suspicious signature and legitimacy conditions) that are sent from an adjacent repeater device (step S111), the identification information determining unit 115 determines whether identification information of the received signature is already registered in the signature list 116a of the filtering unit 116 (step S112). When the identification information is already registered in the signature list 116a (Yes at step S112), the identification information determining unit 115 further determines whether a downstream node registered in correspondence with the identification information is the same as a downstream node of the signature that is actually received (step S113).

When the identification information determining unit 115 determines that the identification information is already registered in the signature list 116a, and the downstream nodes are not the same (Yes at step S112 and No at step S113), the signature communicating unit 114 does not register the received suspicious signature in the signature list 116a (or register over a registered signature), or send (or send again) the received suspicious signature to another adjacent repeater device. The signature communicating unit 114 returns an already registered notification indicating that the signature is already registered to the repeater device corresponding to the downstream node of the received signature (step S118). The repeater device 110 that receives the already registered notification from an adjacent repeater device deletes information (address) corresponding to the adjacent repeater device from the upstream node stored in the signature list 116a.

On the other hand, when the identification information determining unit 115 determines that the identification information of the signature received is not yet registered in the signature list 116a (No at step S112), the signature communicating unit 114 registers the signature and the identification information received in the signature list 116a in the filtering unit 116 (step S114), and the attack detecting unit 113 generates a legitimate signature based on legitimacy conditions received by the signature communicating unit 114 (step S115), and registers the legitimate signature in the signature list 116a (step S116).

The signature communicating unit 114 sends the suspicious signature and the identification information (and legitimacy conditions used for generating the legitimate signature) registered in the signature list 116a to an adjacent repeater device (step S117). According to the relay processing of the signatures, etc., at step S117, the signature communicating unit 114 registers a downstream node for specifying an adjacent repeater device that is a relay source and an upstream node for specifying an adjacent repeater device that is a relay destination in the signature list 116a in correspondence with the suspicious signature and the identification information.

At the determination made at step S113, when the identification information determining unit 115 determines that the identification information of the signature received is already registered in the signature list 116a but a downstream node registered in correspondence with the identification information is the same as a downstream node of the signature that is actually received (Yes at step S113), the signature communicating unit 114 determines that the signature has been sent again, and registers the received signature over the registered signature in the signature list 116a (step S119), the attack detecting unit 113 generates, once again, a legitimate signature based on the legitimacy conditions received by the signature communicating unit 114 (step S120), and registers the legitimate signature in the signature list 116a over the registered legitimate signature (step S121). Furthermore, the signature communicating unit 114 sends again the suspicious signature and the identification information (and legitimacy conditions used for generating the legitimate signature) to another adjacent repeater device indicated by the upstream node registered in the signature list 116a (step S122).

When it is determined that the signature has been sent again (identification information of the received signature is already registered in the signature list 116a, but a downstream node registered in correspondence with the identification information is the same as a downstream node of the signature that is actually received), the suspicious signature is registered over the registered suspicious signature, and a legitimate signature is generated once again and registered over the registered legitimate signature (steps S119 to S121); however, the present invention is not limited thereto. These processings (steps S119 to S121) can be omitted, and only the processing of sending again the suspicious signature, the identification information, and the legitimate conditions (step S122) can be performed.

### [Processes Performed When an Illegitimate Packet is Detected]

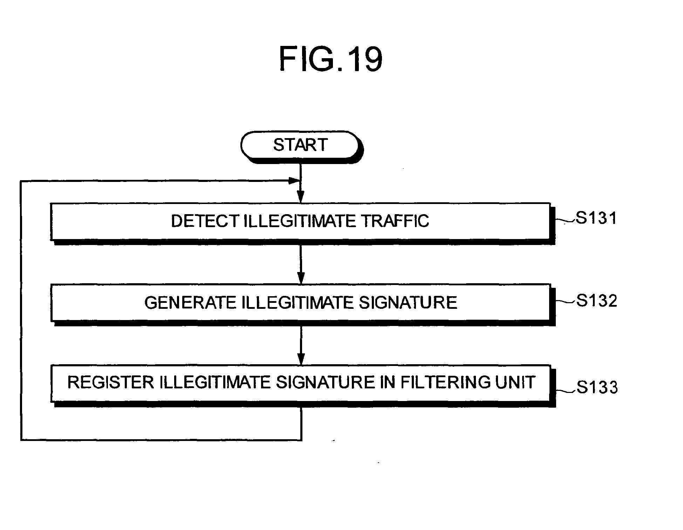

The operation process performed when an illegitimate packet is detected by the repeater device 19 will now be described with reference to Fig. 19. Fig. 19 is a flowchart of the processing procedure performed when an illegitimate packet is detected.

As shown in the figure, when the attack detecting unit 117 of the repeater device 110 detects an illegitimate traffic based on the illegitimate traffic detection conditions shown in Fig. 13 (step S131), the attack detecting unit 117 generates an illegitimate signature (step S132). The attack detecting unit 117 then registers the generated illegitimate signature in the signature list 116a of the filtering unit 116 (step S133).

### [Processes Performed When Controlling Packets]

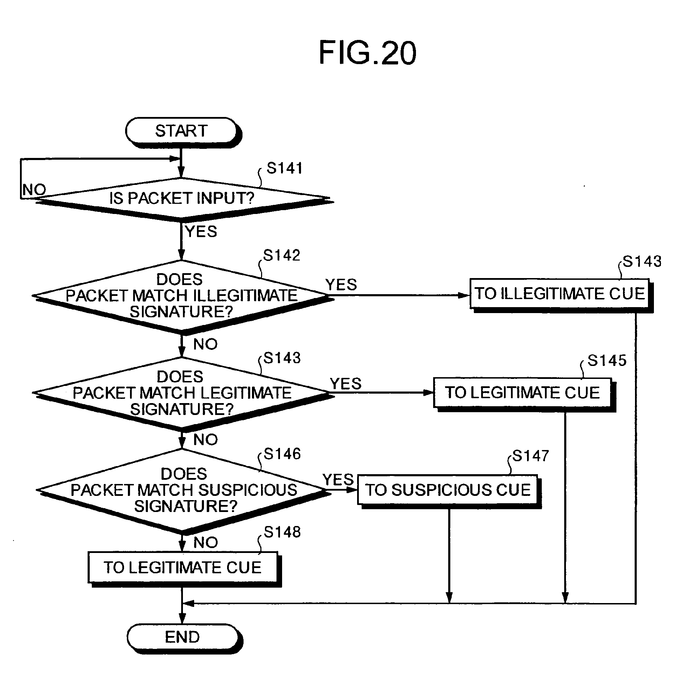

The operation process performed when packets are controlled by the repeater device 110 will now be described with reference to Fig. 20. Fig. 20 is a flowchart of the processing procedure performed when packets are controlled.

As shown in the figure, when a packet is input from the network interfacing unit 111 (Yes at step S141), the filtering unit 116 determines whether the packet matches the illegitimate signature registered in the signature list 116a (step S142). When the packet matches the illegitimate signature (Yes at step S142), the filtering unit 116 inputs the packet into an illegitimate cue for processing illegitimate packets (step S143).

On the other hand, when the packet does not match the illegitimate signature (No at step S142), the filtering unit 116 determines whether the input packet matches the legitimate signature registered in the signature list 116a (step S144). When the packet matches the legitimate signature (Yes at step S144), the filtering unit 116 inputs the packet into a legitimate cue for legitimate users (step S145).

When the packet does not match the legitimate signature (No at step S144), the filtering unit 116 determines whether the input packet matches the suspicious signature registered in the signature list 116a (step S146). When the packet matches the suspicious signature (Yes at step S146), the filtering unit 116 inputs the packet into a suspect cue for suspect users (step S147). On the other hand, when the packet does not match the suspicious signature (No at step S146), the filtering unit 116 inputs the packet into the legitimacy cue (step S148).

Regarding the packets in each cue, the filtering unit 116 outputs packets in the legitimate cue from the network interfacing unit 111 without restricting the transmission band, and restrictingly outputs packets in the suspect cue and the illegitimate cue in accordance with the transmission band restriction values indicated by the respective signatures. When detection attributes, etc., of a registered signature satisfies a predetermined determination criteria, the filtering unit 16 cancels the signature that satisfies the predetermined determination criteria, and stops the process of controlling the passage of packets based on the cancelled signature.

### [Effects of the Second Embodiment]

According to the second embodiment, the repeater device determines whether a signature received from an adjacent repeater device is already registered, and only when the signature is not yet registered, the repeater device registers the signature in the signature list 116a and sends the signature to an adjacent repeater device. Thus, the repeater device avoids redundantly registering or redundantly sending the same signature received from an adjacent repeater device, so that packets can be efficiently controlled based on the signature.

Moreover, according to the second embodiment, the repeater device stores identification information for uniquely identifying each suspicious signature generated in correspondence with each signature. Thus, the repeater devices can determine whether a signature is already registered based on only the identification information, without referring to specific contents of the signature. Furthermore, when the signature has the same contents as a registered signature, but has different identification information (generation source) from the registered signature, the repeater device determines that the signature is not yet registered, registers the signature in the signature list 116a and sends the signature to an adjacent repeater device. Thus, differences in performance (for example, ability of detecting an attack or an algorithm for releasing protection) between each repeater device, which is a generation source, are considered, so that packets can be controlled in a highly safe manner.

Moreover, according to the second embodiment, when a suspicious attacking packet is detected, the repeater device generates a suspicious signature and identification information, sends the signature and the identification information to an adjacent repeater device, and registers in the signature list 116a an upstream ode for specifying an adjacent repeater device that is a relay destination, in correspondence with the suspicious signature and the identification information. Thus, a signature can surely be provided with generation identification information. Furthermore, when a sending error occurs or when contents of the signature are updated, and it is necessary to send again the signature, the repeater device references an upstream node, identification information, and a signature registered in the signature list 116a so that a signature given the same identification information can surely be sent again to the same relay destination.

Moreover, according to the second embodiment, when identification information of a signature received from an adjacent repeater device is not yet registered in the signature list 116a, the repeater device sends the signature to another adjacent repeater device, and registers in the signature list 116a a downstream node for specifying an adjacent repeater device that is a relay source immediately downstream of the signature, and an upstream node for specifying an adjacent repeater device that is a relay destination immediately upstream of the signature in correspondence with the identification information and the signature (see Fig. 15). When the identification information of the signature received from the adjacent repeater device is already registered in the signature list 116a, the repeater device further determines whether the downstream nodes are the same. When the downstream nodes are the same, the repeater device registers the received signature over the registered signature in the signature list 116a, and sends the signature to another adjacent repeater device indicated by the upstream node registered in the signatures list 116a. Thus, when the same signature is received again because a sending error occurred or contents of the signature are updated, the signature is surely sent to a relay destination without being stopped. On the other hand, when the downstream nodes are different, the repeater device determines that the signature is not sent again, so that the repeater device can surely avoid redundantly registering or redundantly sending the same signature.

Furthermore, according to the second embodiment, when identification information of a signature received from an adjacent repeater device is already registered in the signature list 116a, and a downstream node of the received signature is different from that of the registered signature, the repeater device returns an already registered notification indicating that the signature is already registered to the adjacent repeater device corresponding to the downstream node of the received signature. When the already registered notification is received from another adjacent repeater device, the repeater device deletes information (address) corresponding to the adjacent repeater device from the upstream node stored in the signature list 116a. Thus, when it is necessary to send again the same signature because a sending error occurred or contents of the signature are updated, the signature is not sent to a relay destination deleted from the signature list 116a, so that the repeater device can surely avoid redundantly registering or redundantly sending the same signature when sending again the signature.

### [Other Embodiments]

Though the second embodiment of the present invention was described above, the invention may be carried out in various different modes besides the second embodiment.

For example, in the second embodiment, it is determined whether a signature is redundantly registered based on generation identification information that uniquely identifies each signature generated. However, the present invention is not limited to the second embodiment. It can be determined whether a signature is redundantly registered based on whether contents of the signatures are the same, without considering performance of each repeater device that is a generation source. Furthermore, it can be determined whether a signature is redundantly registered based on the performance of each repeater device that is a generation source, i.e., whether contents of the signatures are the same, and whether performance of the generation sources are the same.

Moreover, before sending a suspicious signature and identification information received to an adjacent repeater device, each repeater device 110 can determine whether a number of packets satisfying a condition of a suspicious signature within a unit time exceeds a predetermined threshold. In other words, the repeater device 110 can be made to send the received suspicious signature to another adjacent repeater device only when the repeater device 110 determines that the predetermined threshold is exceeded (only when it determines that there is an attack). For example, in the example shown in Fig. 10, the repeater device 110-4 is not attacked by the communications terminals 130-1 to 130-3, and therefore, even if a suspicious signature and identification information is received from the repeater device 110-2 or the repeater device 110-3, the repeater device 110-4 does not determine that a predetermined threshold is exceeded, and does not send the suspicious signature to the repeater device 110-5 or the repeater device 110-6.

The constituent elements of the devices illustrated in the second embodiment (for example, the repeater device 110 shown in Fig. 10) are merely conceptual and do not necessarily physically resemble the structures shown in the drawings. For instance, the repeater device 110 need not necessarily have the structure that is illustrated. The repeater device 110 as a whole or in parts can be broken down or integrated either functionally or physically in accordance with the load or how the repeater device 110 is to be used. The process functions performed by the repeater device 110 are entirely or partially realized by a CPU or a program executed by the CPU or by a hardware using wired logic.

All the automatic processes explained in the second embodiment can be, entirely or in part, carried out manually. Similarly, all the manual processes explained in the second embodiment can be entirely or in part carried out automatically by a known method. The sequence of processes, the sequence of controls, specific names, and data including various parameters (for example, contents of the suspicious attack detection condition table, the illegitimate traffic detection condition table, and the legitimacy condition table) can be changed as required unless otherwise specified.

In the second embodiment, functions of the devices realizing the present invention (for example, the repeater device 110) are described. The functions of the devices can be implemented by causing a personal computer or a work station to execute computer programs. In other words, the processing procedures described in the second embodiment can be implemented by executing predetermined computer programs. The computer programs can be provided or distributed through a network such as the Internet. Moreover, the computer programs can be stored in a computer-readable recording medium such as a hard disk, a FD), a CD-ROM, an MO, a DVD, and so forth, and can be executed by causing a computer to read a computer program from a recording medium. For example, a CD-ROM storing the computer program of the repeater device as described in the second embodiment can be distributed, and a computer can read and execute the computer program stored in the CD-ROM.

### [Third Embodiment]

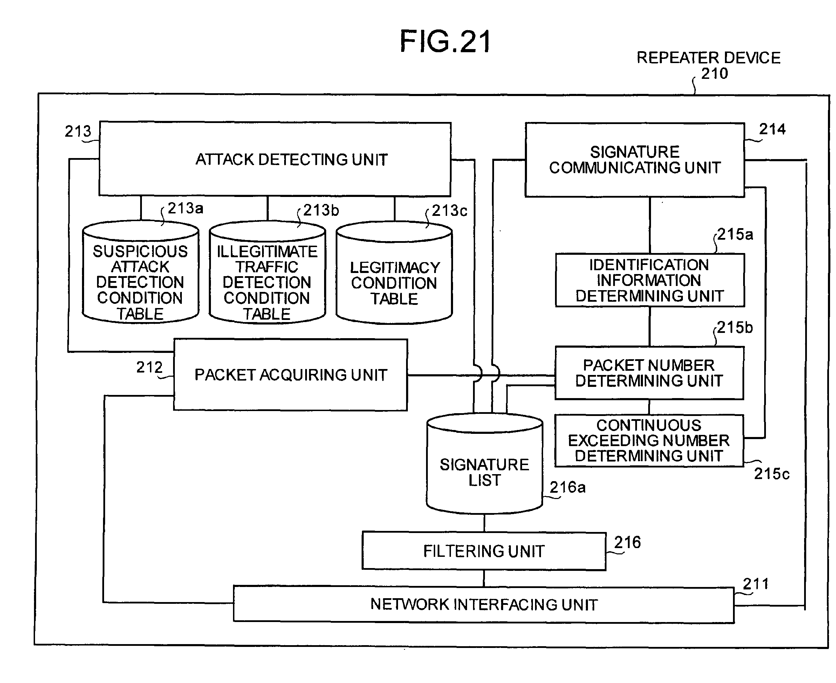

A third embodiment describes a case of combining the processings of restricting packets according to the first embodiment and the second embodiment. Fig. 21 is a detailed block diagram of a repeater device 210 according to the third embodiment. The difference between the repeater devices (10 and 110) according to the first embodiment and the second embodiment and the repeater device 210 according to the third embodiment is mainly described in the following, and overlapping descriptions are omitted.

### [Outline and Characteristics of the System]

As shown in Fig. 21, the repeater device 210 includes an identification information determining unit 215a (corresponding to the identification information determining unit 115 of the repeater device 110 according to the second embodiment), a packet number determining unit 215b (corresponding to the packet number determining unit 15a of the repeater device 10 according to the first embodiment), and a continuous exceeding number determining unit 215c (corresponding to the continuous exceeding number determining unit 15b of the repeater device 10 according to the first embodiment) as processing units for performing a packet restriction processing.

In other words, the repeater device 210 uses identification information for uniquely identifying each signature generated to restrict a packet from being relayed to another repeater device, and restrict a packet from being relayed based on whether a number of packets that satisfy a condition of a signature within a unit time exceeds a predetermined threshold, and whether a number of times that the predetermined threshold is continuously exceeded exceeds a predetermined value. Accordingly, a packet relay restriction processing can be performed flexibly and reliably.

### [Process Performed When a suspicious attacking packet is Detected]

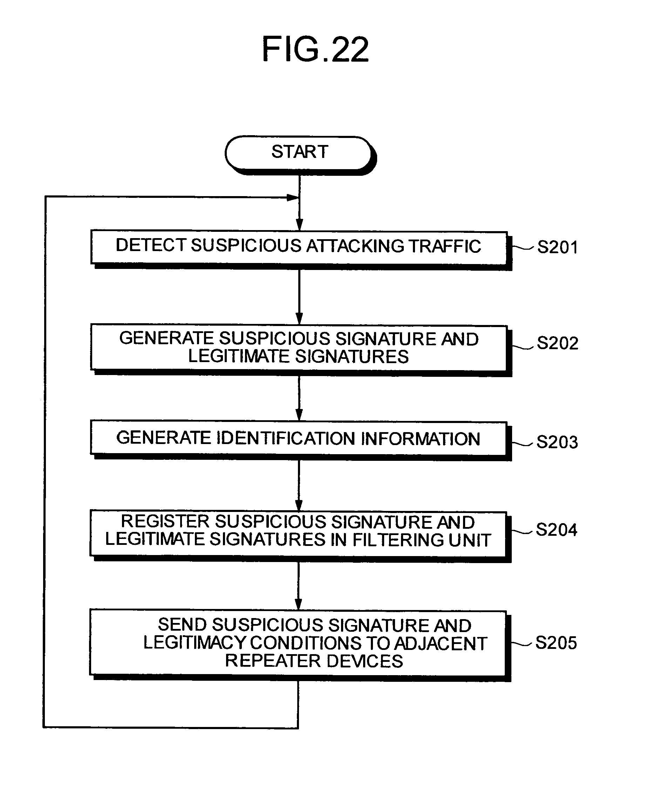

The operation process performed when the repeater device 210 detects a suspicious attacking packet will now be described with reference to Fig. 22. Fig. 22 is a flowchart of the processing procedure performed when a suspicious attacking packet is detected.

As shown in the figure, when the attack detecting unit 213 of the repeater device 210 detects an attack suspect traffic based on the suspicious attack detection condition table 113a shown in Fig. 12 (step S201), the attack detecting unit 213 generates a suspicious signature and legitimate signatures (step S202).

The attack detecting unit 213 generates identification information for uniquely identifying each signature generated (step S203), and registers the suspicious signature and the legitimate signatures with the identification information in the signature list 216a in the filtering unit 216 (step S204). The signature communicating unit 214 sends the signatures, etc. (in the third embodiment, the suspicious signature and the legitimate conditions) and the identification information, which are generated by the attack detecting unit 213, to an adjacent repeater device (step S205).

According a relay processing of the signature, etc., at step S204, the signature communicating unit 214 registers an upstream node for specifying an adjacent repeater device, which is a relay destination, in the signature list 216a. When it is required to send again the suspicious signatures, etc., the signature communicating unit 214 references the signature list 216a and sends again a signature given the same identification information to the same adjacent repeater device that is the relay destination.

### [Processes Performed When a Signature is Received]

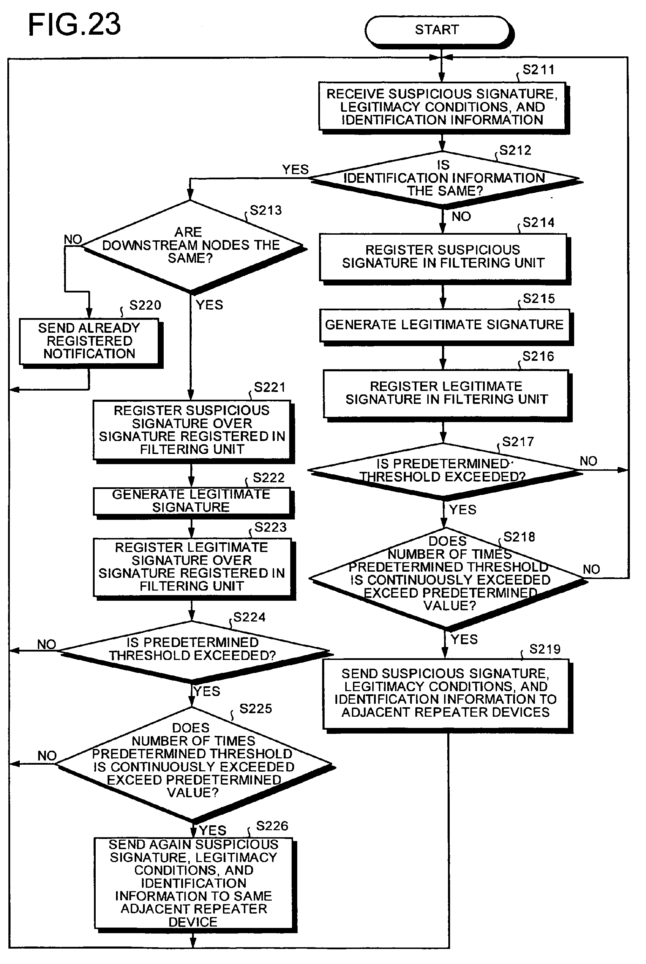

The operation process performed when a signature is received by the repeater device 210 will now be described with reference to Fig. 23. Fig. 23 is a flowchart of the processing procedure performed when a signature is received.

As shown in the figure, when the signature communicating unit 214 of the repeater device 210 receives a signature, etc., (in the third embodiment, a suspicious signature and legitimacy conditions) that are sent from an adjacent repeater device (step S211), the identification information determining unit 215a determines whether identification information of the received signature is already registered in the signature list 216a of the filtering unit 216 (step S212). When the identification information is already registered in the signature list 216a (Yes at step S212), the identification information determining unit 215a further determines whether a downstream node registered in correspondence with the identification information is the same as a downstream node of the signature that is actually received (step S213).

When the identification information determining unit 215a determines that the identification information is already registered in the signature list 216a, and the downstream nodes are not the same (Yes at step S212 and No at step S213), the signature communicating unit 214 does not register the received suspicious signature in the signature list 216a (or register over a registered signature), or send (or send again) the received suspicious signature to another adjacent repeater device. The signature communicating unit 214 returns an already registered notification indicating that the signature is already registered to the repeater device corresponding to the downstream node of the received signature (step S220). The repeater device 210 that receives the already registered notification from an adjacent repeater device deletes information (address) corresponding to the adjacent repeater device from the upstream node stored in the signature list 216a.

On the other hand, when the identification information determining unit 215a determines that the identification information of the signature received is not yet registered in the signature list 216a (No at step S212), the signature communicating unit 214 registers the signature and the identification information received in the signature list 216a in the filtering unit 216 (step S214), and the attack detecting unit 213 generates a legitimate signature based on legitimacy conditions received by the signature communicating unit 214 (step S215), and registers the legitimate signature in the signature list 216a (step S216).

The packet number determining unit 215b acquires packets that satisfy a condition of the suspicious signature registered in the signature list 216a for each unit time from the statistical information provided by the packet acquiring unit 212, and determines whether a number of the acquired packets exceeds a predetermined threshold (step S217).

When the number exceeds the predetermined threshold (Yes at step S217), the continuous exceeding number determining unit 215b determines whether a number of times the predetermined threshold is continuously exceeded exceeds a predetermined value (step S218). When the number of times the predetermined threshold is continuously exceeded exceeds a predetermined value as a result of the determination (step S218), the signature communicating unit 214 sends the suspicious signature and the identification information (and legitimacy conditions used for generating the legitimate signature) registered in the signature list 216a to an adjacent repeater device (step S219). According to the relay processing of the signatures, etc., at step S219, the signature communicating unit 214 registers a downstream node for specifying an adjacent repeater device that is a relay source and an upstream node for specifying an adjacent repeater device that is a relay destination in the signature list 216a in correspondence with the suspicious signature and the identification information.

When the number of packets does not exceed the predetermined threshold at step S217 (No at step S217), or when the number of times the predetermined threshold is continuously exceeded does not exceed a predetermined value at step S218 (No at step S218), the processing of sending the signature received from an adjacent repeater device to another repeater device (the processing at step S219) is not performed.

At the determination made at step S213, when the identification information determining unit 215 determines that the identification information of the signature received is already registered in the signature list 216a but a downstream node registered in correspondence with the identification information is the same as a downstream node of the signature that is actually received (Yes at step S213), the signature communicating unit 214 determines that the signature has been sent again, and registers the received signature over the registered signature in the signature list 216a (step S221), the attack detecting unit 213 generates, once again, a legitimate signature based on the legitimacy conditions received by the signature communicating unit 214 (step S222), and registers the legitimate signature in the signature list 216a over the registered legitimate signature (step S223).

The packet number determining unit 215b acquires packets that satisfy a condition of the suspicious signature registered in the signature list 216a for each unit time from the statistical information provided by the packet acquiring unit 212, and determines whether a number of the acquired packets exceeds a predetermined threshold (step S224).

When the number exceeds the predetermined threshold (Yes at step S224), the continuous exceeding number determining unit 215b determines whether a number of times the predetermined threshold is continuously exceeded exceeds a predetermined value (step S225). When the number of times the predetermined threshold is continuously exceeded exceeds the predetermined value as a result of the determination (Yes at step S225), the signature communicating unit 214 sends again the suspicious signature and the identification information (and legitimacy conditions used for generating the legitimate signature) to another adjacent repeater device indicated by the upstream node registered in the signature list 216a (step S226).

When the number of packets does not exceed the predetermined threshold at step S224 (No at step S224), or when the number of times the predetermined threshold is continuously exceeded does not exceed a predetermined value at step S225 (No at step S225), the processing of sending the signature received from an adjacent repeater device to another repeater device (the processing at step S226) is not performed.

When it is determined that the signature has been sent again (identification information of the received signature is already registered in the signature list 216a, but a downstream node registered in correspondence with the identification information is the same as a downstream node of the signature that is actually received) the suspicious signature is registered over a registered suspicious signature, and a legitimate signature is generated once again and registered over a registered legitimate signature (steps S221 to S223); however, the present invention is not limited thereto. These processings (steps S221 to S223) can be omitted, and only the processing of sending again the suspicious signature, the identification information, and the legitimate conditions (step S224) can be performed.

In the above description, the processing is divided based on identification information of a signature (for example, at step S212), and subsequently, a determination processing is performed based on a predetermined threshold (for example, at step S217 and step S218). However, the present invention is not limited thereto. The processing can be divided according to a determination based on a predetermined threshold, and subsequently, a determination processing can be performed based on identification information of a signature.

### [Effects of the Third Embodiment]

According to the third embodiment, the repeater device restricts a packet from being relayed to another repeater device based on identification information that uniquely identifies each signature generated, and restricts a packet from being relayed based on whether a number of packets that satisfy a condition of a signature within a unit time exceeds a predetermined threshold, and whether a number of times that the predetermined threshold is continuously exceeded exceeds a predetermined value. Accordingly, a packet relay restriction processing can be performed flexibly and reliably.

### INDUSTRIAL APPLICABILITY

As described above, the repeater device, the relaying method, the relaying program, and the network attack protection system according to the present invention are useful for receiving a signature for controlling passage of a packet from an adjacent repeater device and sending the received signature to another adjacent repeater device, and are especially suitable for reducing a processing load on the repeater devices arranged in a network, and efficiently performing a packet restriction processing.

## Claims

1. A repeater device that receives from an adjacent repeater device a signature for controlling a passage of a packet and sends the signature received to another adjacent repeater device, wherein the repeater device
determines whether to send the signature to the another adjacent repeater device based on the signature received from the adjacent repeater device, and
sends the signature received from the adjacent repeater device to the another adjacent repeater device when the repeater device determines that the signature is to be sent to the another adjacent repeater device.

2. The repeater device according to claim 1, further comprising:
an attack presence determining unit that monitors whether there is a packet that satisfies a condition of the signature received from the adjacent repeater device, and determines whether there is an attack by the packet; and
a signature sending unit that sends the signature received from the adjacent repeater device to the another adjacent repeater device when the attack presence determining unit determines that there is an attack.

3. The repeater device according to claim 2, wherein
the attack presence determining unit includes a packet number determining unit that determines whether a number of packets that satisfy a condition of the signature received from the adjacent repeater device within a unit time exceeds a predetermined threshold, and
the signature sending unit sends the signature received from the adjacent repeater device to the another adjacent repeater device when the packet number determining unit determines that the number of packets within the unit time exceeds the predetermined threshold.

4. The repeater device according to claim 3, wherein
when the packet number determining unit determines that the number of packets within the unit time exceeds the predetermined threshold, the attack presence determining unit further includes a continuous exceeding number determining unit that determines whether a number of times that the predetermined threshold is continuously exceeded exceeds a predetermined value, and
the signature sending unit sends the signature received from the adjacent repeater device to the another adjacent repeater device when the continuous exceeding number determining unit determines that the number of times exceeds the predetermined value.

5. The repeater device according to claim 2, 3, or 4, wherein the signature sending unit sends the signature to another adjacent repeater device other than the adjacent repeater device from which the signature is received among all adjacent repeater devices.

6. The repeater device according to claim 1, further comprising:
a signature storage unit that stores the signature received;
a signature registration determining unit that determines whether the signature received from the adjacent repeater device is already registered in the signature storage unit; and
a signature communicating unit that registers the signature received from the adjacent repeater device in the signature storage unit when the identification information determining unit determines that the signature is not yet registered, and sends the signature to the another adjacent repeater device.

7. The repeater device according to claim 6, wherein
the signature storage unit stores the signature in correspondence with generation identification information that uniquely identifies each signature generated,
the signature registration determining unit determines whether generation identification information of the signature received from the adjacent repeater device is already registered in the signature storage unit, and
the signature communicating unit registers the signature and the generation identification information received from the adjacent repeater device in the signature storage unit when the signature registration determining unit determines that the generation identification information is not yet registered in the signature storage unit, and sends the signature and the generation identification information received to the another adjacent repeater device.

8. The repeater device according to claim 7, further comprising:
a signature generating unit that generates, when a suspicious attacking packet is detected, a signature and generation identification information of the signature, wherein
the signature generating unit sends the signature and the generation identification information to the another adjacent repeater device, and registers relay destination information that specifies an adjacent repeater device that is a relay destination, the generation identification information, and the signature in correspondence with each other in the signature storage unit.

9. The repeater device according to claim 8, wherein
when the signature registration determining unit determines that the generation identification information of the signature received from the adjacent repeater device is not yet registered in the signature storage unit, the signature communicating unit sends the signature and the generation identification information received from the adjacent repeater device to the another adjacent repeater device, and registers relay source information that specifies an adjacent repeater device that is a relay source immediately before the signature, relay destination information that specifies an adjacent repeater device that is a relay destination immediately after the signature, the generation identification information, and the suspicious signature in correspondence with each other in the signature storage unit,
the signature registration determining unit further determines, when the generation identification information of the signature received from the adjacent repeater device is already registered in the signature storage unit, whether relay source information registered in correspondence with the generation identification information is same as relay source information of the signature received from the adjacent repeater device, and
when the signature registration determining unit determines that the generation identification information is already registered in the signature storage unit but the relay source information of the signature received is same as the relay source information registered, the signature communicating unit registers the signature received from the adjacent repeater device over the signature registered in the signature storage unit, and sends the signature received to another adjacent repeater device indicated by the relay destination information registered in the signature storage unit.

10. The repeater device according to claim 9, wherein
the signature communicating unit returns, when the signature registration determining unit determines that the relay source information of the signature received is different from the relay source information of the signature registered, an already registered notification indicating that the signature is already registered to the adjacent repeater device that is the relay source of the signature, and
deletes, when the already registered notification is received from another repeater device, relay destination information corresponding to the adjacent repeater device from the relay destination information stored in the signature storage unit.

11. A network attack protection system including a plurality of repeater devices that receives from an adjacent repeater device a signature for controlling a passage of a packet and sends the signature received to another adjacent repeater device, wherein each of the repeater devices includes
an attack presence determining unit that monitors whether there is a packet that satisfies a condition of the signature received from the adjacent repeater device, and determines whether there is an attack by the packet, and
a signature sending unit that sends the signature received from the adjacent repeater device to the another adjacent repeater device when the attack presence determining unit determines that there is an attack.

12. A network attack protection system including a plurality of repeater devices that receives from an adjacent repeater device a signature for controlling a passage of a packet, registers the signature received in a signature storage unit, controls the passage of the packet, and sends the signature received to another adjacent repeater device, wherein each of the repeater devices includes
a signature registration determining unit that determines whether the signature received from the adjacent repeater device is already registered in the signature storage unit, and
a signature communicating unit that registers the signature received from the adjacent repeater device in the signature storage unit when the identification information determining unit determines that the signature is not yet registered, and sends the signature to the another adjacent repeater device.

13. A relaying method performed by a repeater device that receives from an adjacent repeater device a signature for controlling a passage of a packet and sends the signature received to another adjacent repeater device, the relaying method comprising:
an attack presence determining step of monitoring whether there is a packet that satisfies a condition of the signature received from the adjacent repeater device, and determining whether there is an attack by the packet; and
a signature sending step of sending the signature received from the adjacent repeater device to the another adjacent repeater device when it is determined at the attack presence determining step that there is an attack.

14. The relaying method according to claim 13, wherein
the attack presence determining step includes a packet number determining step of determining whether a number of packets that satisfy a condition of the signature received from the adjacent repeater device within a unit time exceeds a predetermined threshold, and
the signature received from the adjacent repeater device is sent to the another adjacent repeater device at the signature sending step when it is determined at the packet number determining step that the number of packets within the unit time exceeds the predetermined threshold.

15. The relaying method according to claim 14, wherein
the attack presence determining step further includes a continuous exceeding number determining step of determining whether a number of times that the predetermined threshold is continuously exceeded exceeds a predetermined value when it is determined at the packet number determining step that the number of packets within the unit time exceeds the predetermined threshold, and
the signature received from the adjacent repeater device is sent to the another adjacent repeater device at the signature sending step when it is determined at the continuous exceeding number determining step that the number of times exceeds the predetermined value.

16. The relaying method according to claim 13, 14, or 15, wherein the signature is sent to another adjacent repeater device other than the adjacent repeater device from which the signature is received among all adjacent repeater devices at the signature sending step.

17. A relaying method for receiving from an adjacent repeater device a signature for controlling a passage of a packet, registering the signature received in a signature storage unit, controlling the passage of the packet, and sending the signature received to another adjacent repeater device, wherein the relaying method includes
a signature registration determining step of determining whether the signature received from the adjacent repeater device is already registered in the signature storage unit, and
a signature communicating step of registering the signature received from the adjacent repeater device in the signature storage unit when it is determined at the identification information determining step that the signature is not yet registered, and sends the signature to the another adjacent repeater device.

18. The relaying method according to claim 17, wherein
the signature storage unit stores the signature in correspondence with generation identification information that uniquely identifies each signature generated,
the signature registration determining step includes determining whether generation identification information of the signature received from the adjacent repeater device is already registered in the signature storage unit, and
the signature communicating step includes registering the signature and the generation identification information received from the adjacent repeater device in the signature storage unit when it is determined at the signature registration determining step that the generation identification information is not yet registered in the signature storage unit, and sending the signature and the generation identification information received to the another adjacent repeater device.

19. The relaying method according to claim 18, further comprising:
a signature generating step of generating, when a suspicious attacking packet is detected, a signature and generation identification information of the signature, wherein
the signature generating step includes sending the signature and the generation identification information to the another adjacent repeater device, and registering relay destination information that specifies an adjacent repeater device that is a relay destination, the generation identification information, and the signature in correspondence with each other in the signature storage unit.

20. A relaying program that causes a computer to function as a repeater device that receives from an adjacent repeater device a signature for controlling a passage of a packet and sends the signature received to another adjacent repeater device, the relaying program causing the repeater device to execute:
an attack presence determining step of monitoring whether there is a packet that satisfies a condition of the signature received from the adjacent repeater device, and determining whether there is an attack by the packet; and
a signature sending step of sending the signature received from the adjacent repeater device to the another adjacent repeater device when it is determined at the attack presence determining step that there is an attack.

21. The relaying program according to claim 20, wherein
the attack presence determining step includes a packet number determining step of determining whether a number of packets that satisfy a condition of the signature received from the adjacent repeater device within a unit time exceeds a predetermined threshold, and
the signature received from the adjacent repeater device is sent to the another adjacent repeater device at the signature sending step when it is determined at the packet number determining step that the number of packets within the unit time exceeds the predetermined threshold.

22. The relaying program according to claim 21, wherein
the attack presence determining step further includes a continuous exceeding number determining step of determining whether a number of times that the predetermined threshold is continuously exceeded exceeds a predetermined value when it is determined at the packet number determining step that the number of packets within the unit time exceeds the predetermined threshold, and
the signature received from the adjacent repeater device is sent to the another adjacent repeater device at the signature sending step when it is determined at the continuous exceeding number determining step that the number of times exceeds the predetermined value.

23. The relaying program according to claim 20, 21, or 22, wherein the signature is sent to another adjacent repeater device other than the adjacent repeater device from which the signature is received among all adjacent repeater devices at the signature sending step.

24. A relaying program that causes a computer to function as a repeater device that receives from an adjacent repeater device a signature for controlling a passage of a packet, registers the signature received in a signature storage unit, controlling the passage of the packet, and sends the signature received to another adjacent repeater device, the relaying program causing the repeater device to execute:
a signature registration determining step of determining whether the signature received from the adjacent repeater device is already registered in the signature storage unit, and
a signature communicating step of registering the signature received from the adjacent repeater device in the signature storage unit when it is determined at the identification information determining step that the signature is not yet registered, and sends the signature to the another adjacent repeater device.

25. The relaying program according to claim 24, wherein
the signature storage unit stores the signature in correspondence with generation identification information that uniquely identifies each signature generated,
the signature registration determining step includes determining whether generation identification information of the signature received from the adjacent repeater device is already registered in the signature storage unit, and
the signature communicating step includes registering the signature and the generation identification information received from the adjacent repeater device in the signature storage unit when it is determined at the signature registration determining step that the generation identification information is not yet registered in the signature storage unit, and sending the signature and the generation identification information received to the another adjacent repeater device.

26. The relaying program according to claim 25, further comprising:
a signature generating step of generating, when a suspicious attacking packet is detected, a signature and generation identification information of the signature, wherein
the signature generating step includes sending the signature and the generation identification information to the another adjacent repeater device, and registering relay destination information that specifies an adjacent repeater device that is a relay destination, the generation identification information, and the signature in correspondence with each other in the signature storage unit.
